# EUROPÄISCHE PATENTSCHRIFT

(11) **EP 1 125 112 B1**
(45) Veröffentlichungstag und Bekanntmachung des Hinweises auf die Patenterteilung: **23.06.2004**
(21) Anmeldenummer: 99953418.3
(22) Anmeldetag: 28.10.1999
(51) Int. Cl.: G01N 21/64

(54) **VORRICHTUNG ZUR VISUALISIERUNG VON MOLEKÜLEN**
DEVICE FOR VISUALIZING MOLECULES
DISPOSITIF DE VISUALISATION DE MOLECULES

(30) Priorität: 28.10.1998 AT 179998
(43) Veröffentlichungstag der Anmeldung: 22.08.2001
(73) Patentinhaber: Schindler, Hansgeorg, 4042 Linz (AT)
(72) Erfinder: Schindler, Hansgeorg, 4042 Linz (AT)
(74) Vertreter: Alge, Daniel, Mag. Dr. rer.nat.
(86) Internationale Anmeldenummer: PCT/AT1999/000257
(87) Internationale Veröffentlichungsnummer: WO 2000/025113

(56) Entgegenhaltungen:
- WO-A-97/22848
- US-A- 5 528 046
- US-A- 5 815 262

## Beschreibung

Die Erfindung betrifft ein Verfahren zur Visualisierung von Molekülen, von Wechselwirkungen zwischen Molekülen und von molekularen Prozessen in einer Probe unter Verwendung der Einzelfarbstoff-Markierungsmethode, sowie Vorrichtungen zur Durchführung derartiger Verfahren.

Das Ziel von hoch-sensitiven Detektionssystemen ist die Beobachtung auf dem Niveau einzelner Atome bzw. Moleküle. Dies wurde erstmals durch die Erfindung der "Scanning Probe" Mikroskopie-Methoden ermöglicht (EP 0 027 517-B1; Binnig et al., Phys. Rev. Lett. 56 (1986), Seiten 930-933; Drake et al., Science 243 (1989), Seiten 1586-1589). Aber auch mit optischen Methoden wurde die Detektion von einzelnen Molekülen ermöglicht. Die effektive Lichtumwandlung durch fluoreszente Moleküle ermöglichte auch die Detektion von einzelnen Fluorophoren in Flüssigkeiten durch konfokale Fluoreszenzmikroskopie sowie die Durchführung von einer hochauflösenden Spektroskopie von Einzelfarbstoff-("Single-Dye")Molekülen bei niedrigen Temperaturen.

Die erste wirkliche Abbildung von Einzelfarbstoff-Molekülen durch optische Mittel wurde durch optische Nahfeld-Scanning-Mikroskopie erreicht (Betzig et al., Science 262 (1993), 1422-1425). Mit diesem Verfahren wurde eine räumliche Auflösung von rund 14 nm erzielt, also weit unter der optischen Diffraktionsgrenze, diese Methode ist jedoch bei ihrer Anwendung auf unbewegliche Objekte beschränkt.

Weiters gelang es, einzelne Fluoreszenz-markierte Myosin-Moleküle auf immobilisierten Actinfilamenten durch konventionelle Mikroskopie und Beleuchtungszeiten von Sekunden darzustellen (Funatsu et al., Nature 374 (1995), Seiten 555-559). Die Methode ist auf Beobachtungen in unmittelbarer Nähe der Substratoberfläche (bis etwa 100 nm Abstand) beschränkt.

In der GB 2 231 958 wird die Charakterisierung der Fluoreszenz von festen Proben durch zeitaufgelöste Fluoreszenz-Spektroskopie beschrieben. Hierbei wird nicht einmal Einzelmolekülempfindlichkeit erreicht, so dass keine Detektion einzelner Fluorophore beschrieben wird. Die Fluoreszenz ist dabei fix in der Probe und nicht beweglich. Analyseflächen in der Probe werden nicht mikroskopiert, sondern im "scanning"-Verfahren durch einen Fokus abgetastet.

Die in der US 5 528 046 beschriebene Methode ist zwar prinzipiell zur Detektion von Einzelfluorophoren geeignet, jedoch nur, wenn diese in Clustern auf Oberflächen fixiert worden sind. Diese Messung im Trockenen (nicht in der wässerigen Phase) ist selbstverständlich für biologische Präparate nicht geeignet, da durch den Antrocknungsvorgang die funktionelle und strukturelle Intaktheit der biologischen Präparate zerstört wird. Die apparativen Voraussetzungen für die in der US 5 528 046 beschriebenen Methode sind daher nicht zur Beobachtung von Einzelmolekülen in biologischen Proben geeignet. Weiters ist auch eine Verschiebung der Probe, die mit der Detektions- und Analysevorrichtung gekoppelt ist, nicht vorhanden. Demgemäß ist mit der dortigen Methodologie die Abbildung von Biolmolekülen die in wenigen Millisekunden erfolgen muß (höchstens 50 Millisekunden) prinzipiell nicht möglich, da mit der in der US 5 528 046 beschriebenen Vorrichtung die Beleuchtungszeit um die 60 Sekunden beträgt.

Gemäß der US 4 793 705 wird zwar behauptet, individuelle Partikel oder Moleküle identifizieren zu können, tatsächlich stellte sich aber diese Methode als nicht durchführbar heraus, da sich einzelne Fluoreszenzmoleküle nicht eindeutig detektieren und erst recht nicht abbilden ließen. Das Verhältnis von Signal zu Hintergrund der Einzelbeobachtung war mit rund 0,2 äußerst gering, so dass die Fluktuation des Hintergrundes etwa gleich groß ist wie das Signal. Auch durch die aufeinanderfolgende Wiederholung der Beobachtung, wie auch durch das parallele Sammeln durch zwei Detektoren ändert sich hierbei nichts. Somit ist auch dieses Verfahren für die Einzelmoleküldetektion in Lösung oder in biologischen Systemen nicht anwendbar. Das Verfahren ist keine Bild-gebende Mikroskopie, sondern nimmt räumliche Informationen sequentiell auf. Auch fehlt die Steuerung einer Relativbewegung durch die Detektions- und Analysevorrichtung.

Einzelmolekülnachweis über Fluoreszenz-Spektroskopie in großen Volumina werden in der DE 197 18 016 A und der US 5 815 262 A beschrieben, sowie sequentielle Fluorophor-Detektion im "confocal scanning"-Verfahren (WO 97/43611). Jedoch ist auch mit diesen Systemen die räumliche Mikroskopie und die zeitliche Beobachtung von Einzelmolekülbewegungen, insbesondere in biologischen Systemen (z.B in Zellen), nicht möglich.

Um biologische Systeme allerdings in ihrer Ausdehnung und in ihrer natürlichen Funktion und ihrer physiologischen Wirkungsweise untersuchen zu können, ist die möglichst gleichzeitige Visualisierung von einzelnen Fluorophoren in komplexen Systemen und in Bewegung erforderlich, also echte Bild-gebende Mikroskopie (kein "scanning" eines Fokus) mit Einzelmolekülempfindlichkeit, ohne Beschränkung auf die unmittelbare Nähe zur Probenoberfläche oder zur Substratoberfläche. Bislang wurde die Bewegung von Einzelfarbstoff-Molekülen lediglich für Fluoreszenz-markierte Lipide in einem künstlichen Lipidmembranensystem dargestellt (Schmidt et al., PNAS 93 (1996), Seiten 2926-2929). Die hierbei verwendete Methodik wird im Allgemeinen als "Single-Dye-Tracing" (SDT)-Methode bezeichnet, da es damit möglich ist, den Weg eines einzigen Fluoreszenz-markierten Moleküls und von mehreren gleichzeitig exakt und (als einzelnes Molekül) stöchiometrisch zu verfolgen, ohne dass es für die Signalgebung einer Wechselwirkung (Verstärkung) mit anderen Komponenten bedarf (etwa durch Bindung, räumliches Nahverhältnis, etc.)

Die Kartierung der Positionen und die Verfolgung der Bewegungen von Einzelfarbstoff-markierten Molekülen in zellulären Systemen, welche für ein Studium von Molekülen oder Wechselwirkungen zwischen Molekülen in lebenden Systemen erforderlich wäre, ist allerdings mit den beschriebenen Methoden nicht möglich. Dies liegt einerseits daran, dass lebende Zellen im Gegensatz zu ebenen (planaren) künstlichen Lipidmembranen dreidimensional sind, so dass molekulare Bewegungen im Allgemeinen nicht in einer optischen Bildebene erfolgen, andererseits daran, dass Zellen immer eine gewisse Eigenfluoreszenz aufweisen, die den eigentlichen Visualisierungsvorgang mittels Fluoreszenzmikroskopie behindern kann. Weiters wurde es auch bislang als unmöglich angesehen, eine Vielzahl an solchen zellulären Systemen mit einer geeigneten Detektions- und Analysemethode derartig schnell zu analysieren, so dass sowohl die Auflösung im einzelmolekularen Bereich erhalten bleibt, als auch molekulare Bewegungen der zu detektierenden Moleküle verfolgt werden können.

Vor allem die pharmazeutische Industrie ist jedoch immer mehr an Methoden interessiert, mit denen ein Hochdurchsatz-Screening ("High-Throughput-Screening", HTS) von einer großen Zahl von möglichen Testmolekülen möglich ist. Gerade für HTS-Verfahren sind allerdings die bisher beschriebenen Verfahren zum SDT nicht geeignet.

Die Aufgabe der vorliegenden Erfindung liegt daher darin, die SDT-Methode derart zu verändern, dass damit ein Screening, insbesondere ein HTS, möglich wird.

Weiters soll ein SDT-Verfahren zur Verfügung gestellt werden, mit welchem molekulare Prozesse ein oder mehrerer verschiedener Arten von Molekülen, vorzugsweise auch in zellulären Systemen, in ihrer realen Raum-Zeitdimension verfolgt werden können, wobei Informationen über Kolokalisation von Molekülen sowie über Stöchiometrie molekularer Assoziate und Konformationen der Moleküle ebenfalls erhalten werden sollen.

Weiters soll eine Vorrichtung und ein Verfahren zur Verfügung gestellt werden, mit dem die Abbildung von Fluoreszenz-markierten Molekülen in ihrer Verteilung über ganze biologische Systeme, insbesondere Zellen, ermöglicht wird. Weiters soll die Abbildung von Folgen von molekularen Bewegungen und Prozessen ermöglicht werden, so dass eine dreidimensionale Zeit-aufgelöste Abbildung von komplexen biologischen Systemen, wie Zellen, ermöglicht wird.

Diese Aufgabe wird erfindungsgemäß gelöst durch eine Vorrichtung zur Visualisierung von Molekülen, von deren Bewegung und von Wechselwirkungen zwischen Molekülen und von molekularen Prozessen in einer Probe, insbesondere von Molekülen und Prozessen in biologischen Zellen, unter Verwendung der Single-Dye-Tracing-(SDT-) Methode, umfassend:
mindestens eine Lichtquelle zur großflächigen Fluoreszenzanregung mit Licht, insbesondere Laserlicht, mindestens einer Wellenlänge über Ein- oder Mehrphotonenabsorption durch gleiche oder verschiedene Markermoleküle an Molekülen in der Probe,
   - einen Objektträger zur Aufnahme der Probe,
   - ein hochempfindliches Detektions- und Analysesystem, das eine Charge-Coupled-Device- (CCD-) Kamera umfasst, wobei die Probe bzw. der Objektträger und das Detektionsund Analysesystem beim Messprozess lateral und vertikal relativ zueinander verschiebbar sind, und
   - eine Steuereinheit zur Koordination und Synchronisation von Beleuchtungszeiten und gegebenenfalls Wellenlängen, der lateralen und/oder vertikalen Relativbewegung zwischen der Probe bzw. dem Objektträger mit der Probe und dem Detektions- und Analysesystem sowie gegebenenfalls der Positionierung und Verschiebung der Abbilder zu jeder Probenposition auf dem Pixelarray der CCD-Kamera.

Bedingt durch die großflächige Fluoreszenzanregung, vorzugsweise 100 bis 10 000 µm², je nach Anwendung, kann die Abbildung der angeregten Moleküle in einem großen Bereich sehr schnell erfolgen und auf dem Pixelarray der CCD-Kamera eingelesen werden. Dabei muss nur die Lichtquelle zur großflächigen Fluoreszenzanregung geeignet sein.
Eine bevorzugte Lichtquelle ist dabei ein Laser. Bevorzugterweise wird ein Argonlaser, ein Dyelaser und/oder ein 2-Photonen-Fluoreszenz-Anregungs-Laser eingesetzt, mit akusto-optischer Umschaltung zwischen diesen Lichtquellen und zur zeitlichen Abfolge der Beleuchtung.

Die erfindungsgemäß zu verwendende CCD-Kamera weist bevorzugterweise einen Frameshift-Modus und einen kontinuierlichen Auslese-Modus auf.

Bevorzugterweise wird erfindungsgemäß eine CCD-Kamera eingesetzt, die eine oder mehrere der folgenden Eigenschaften aufweist: sie ist N₂-gekühlt; sie hat einen großen Pixelarray, insbesondere einen Pixelarray > 1340 x 1300 Pixeln; sie ist in der Lage, eine Konversion von Photonen in Elektronen von 0,8 bis 0,9 im optischen Bereich zu bewerkstelligen; sie weist ein Ausleserauschen von nur wenigen Elektronen pro Pixel, vorzugsweise von nur 0 bis 10, insbesondere 3 bis 7, Elektronen pro Pixel, bei 1 µs/Pixel Auslesegeschwindigkeit auf; und/oder sie hat eine Lineshift-Rate von > 3 x 10⁵/s.

Bei der erfindungsgemäßen Vorrichtung ist eine Relativbewegung zwischen der Probe und dem Detektions- bzw. Analysesystem erforderlich, wobei diese Relativbewegung sowohl kontinuierlich als auch schrittweise erfolgen kann. Bevorzugterweise soll dabei die laterale Bewegung kontinuierlich konstant möglich sein, und die vertikale Bewegung durch schrittweises Verschieben der Fokussierungsebene erreicht werden.

Die Steuereinheit der erfindungsgemäßen Vorrichtung dient sowohl zur Koordination und Synchronisation der Beleuchtungszeiten und - wenn mehrere Wellenlängen eingesetzt werden - zur Steuerung der Wellenlängen, als auch zur Koordinierung der lateralen oder vertikalen Relativbewegung zwischen Probe und Detektions- und Analysesystem. Diese Steuerung kann beispielsweise durch die CCD-Kamera selbst erfolgen oder aber durch eine Vorrichtung, umfassend einen Pulsgeber und eine Software zur Steuerung der Lichtquelle(n) und der (Relativ)bewegung der Probe. Bevorzugterweise kann dabei die Steuereinheit auch die Positionierung und die Verschiebung der Abbilder zu jeder Probenprosition auf dem Pixelarray der CCD-Kamera koordinieren und synchronisieren und das Auslesen und die Auswertung der Pixelarray-Abbilder steuern und koordinieren.

Die erfindungsgemäße Vorrichtung umfasst bevorzugterweise ein Epifluoreszenz-Mikroskop, insbesondere ein Epifluoreszenz-Mikroskop mit einer Sammeleffizienz von Fluoreszenzquanten als Elektronen in Pixeln der CCD-Kamera von > 3 %, bei 40- bis 100-facher Vergrößerung.

Als Probe wird vorzugsweise eine durch kombinatorische Chemie hergestellte Molekülbank verwendet.

Weiters bevorzugt ist, dass die Probe eine Multiwellplatte oder eine Mikro- (Nano-) Titerplatte umfasst.

Vor allem, wenn ein Epifluoreszenz-Mikroskop mit einem Parallelstrahlbereich als Lichtquelle eingesetzt wird, wird bevorzugterweise ein galvano-optischer Spiegel im Parallelstrahlbereich vorgesehen, mit welchem beispielsweise eine noch schnellere Datenspeicherung ermöglicht wird, als sie durch die Auslesegeschwindigkeit bzw. Frametransfer der CCD-Kamera gegeben ist.

Beim erfindungsgemäßen System können "gefärbte" Einzelmoleküle (z.B. Fluoreszenz-markierte Biomoleküle) einer Probe, insbesondere einer biologischen Probe, welche sich auf einem Objektträger befindet, durch das hochempfindliche Detektions- und Analysesystem auf ein Pixelarray der CCD-Kamera abgebildet werden, wobei die Probe und/oder das Detektions- und Analysesystem relativ zueinander kontinuierlich und konstant verschoben werden kann. Für diese Relativverschiebung kann der Frameshift der CCD-Kamera benutzt werden, so dass die Signale (z.B. die Fluoreszenzphotonen) jedes Einzelmoleküls, nach Konversion in Elektronen ("counts"), in den gleichen Pixeln gesammelt werden, so lange, bis das Einzelmolekül-Signal (Zahl der "counts") einen bestimmten Mindest-Signal/Rausch-Abstand (der die Signifikanz der Messung gewährleistet) übersteigt.

Mit der erfindungsgemäßen Vorrichtung ist ein entscheidender Fortschritt gegenüber den beschriebenen Methoden zur Detektion von einzelnen Molekülen in artifizellen Lipidmembranen (Schmidt et al., Laser und Optoelektronik 29(1) (1997), Seiten 56-62) gelungen, indem das dort verwendete System mit der erfindungsgemäßen Vorrichtung bedingt durch den Verschiebungsprozess auch als HTS-Verfahren betrieben werden kann und darüberhinaus einfach auf ganze biologische Zellen angewendet werden kann. Durch die Erweiterung des hochempfindlichen Detektions- und Analysesystems mit einem Scanning-System konnte überraschenderweise auf einfache Art (denn jede CCD-Kamera weist im Prinzip einen Frameshift (die Verschiebungs- bzw. Auslese-Geschwindigkeit von Linie zu Linie des Pixelarrays der Kamera) auf) mit maximierter Durchsatzrate eine konstante Einzelmolekül-Empfindlichkeit beibehalten werden, sowie Fluorophore an oder in ganzen Zellen in sehr kurzer Zeit (etwa in 120 ms) abgebildet werden.

Das erfindungsgemäße hochauflösende Detektions- und Analysesystem muß zur Abbildung der Probe auf dem Objektträger insofern geeignet sein, als es eine Pixelarray-Abbildung der Probe mit einer Lokalisation einzelner Moleküle von zumindest 50 bis 100 nm aufweisen muß. Dafür wird erfindungsgemäß eine Charged Coupled Device-Kamera (CCD-Kamera) verwendet, welche sich bislang schon insbesondere bei der Epifluoreszenz-Mikroskopie bewährt hat. Damit lassen sich problemlos Genauigkeiten der Lokalisation von unter 30 nm erreichen.

Bei der Datenaufnahme soll die laterale Bewegung der Probe bevorzugterweise konstant und kontinuierlich durchgeführt werden, da ein abruptes Abstoppen oder eine starke Beschleunigung der Probe zu einer zusätzlichen Bewegung der in der Probe zu detektierenden Moleküle z.B. auf oder in den Zellen führen kann, was zu einer Verlängerung der Aufnahmezeiten (bedingt durch Relaxationsprozesse der Zelldynämik) um zumindest das 10-fache, die auch eine Zellantwort induzieren können, und damit zu einer Verfälschung der zu beobachtenden biologischen Prozesse führen könnte. Üblicherweise werden dafür Step-Motoren verwendet, die eine geglättete Bewegungsweise durch rasches Aufeinanderfolgen der Bewegungsschritte gewährleisten. "Konstant" und "kontinuierlich" bedeuten daher im Rahmen der vorliegenden Erfindung, dass während des Messprozesses kein längeres Abstoppen der Probe (bzw. Messung im Ruhezustand) erfolgt, sondern die Probe (bzw. der Objektträger) ständig relativ zum Detektions- und Analysesystem bewegt wird.

Vorzugsweise wird die Bewegung der Probe in x-y-Richtung direkt durch das Detektions- und Analysesystem gesteuert, wobei die Steuerung an die jeweiligen Eigenheiten des Detektions- und Analysesystems angepasst werden kann. Wird eine CCD-Kamera im Detektions- und Analysesystem verwendet, so kann die Relativverschiebung durch den der CCD-Kamera eigenen Frameshift direkt getriggert werden. Bei Beleuchtung einer bestimmten Fläche auf dem Objektträger, die auf dem ganzen verwendeten Pixelarray abgebildet wird, wird die Probe kontinuierlich verschoben und gleichzeitig das Bild der Probe auf dem Pixelarray durch kontinuierlichen Frameshift line-by-line ebenfalls verschoben. Bei optimaler Abstimmung beider Geschwindigkeiten (relative Bewegungsgeschwindigkeit der Probe und Frameshift (Linienauslesegeschwindigkeit) der CCD-Kamera) wird die von einem markierten Molekül der Probe gesammelte Information während des Durchquerens des beleuchteten Bereiches von praktisch den gleichen Pixeln gesammelt. Optimalerweise ist die Geschwindigkeit, mit der die Probe bewegt wird, gleich der Geschwindigkeit der CCD-Kamera, dividiert durch die Vergrößerung des Objektivs.

Wird aber zusätzlich zur x-y-Bewegung auch die Abbildung entlang der z-Richtung aufgenommen, so wird bevorzugterweise eine getrennte Steuereinheit, insbesondere eine Einheit mit eigenem Pulsgeber und eigener Software, verwendet.

Erfindungsgemäß wird als Farbstoff vorwiegend Fluoreszenz-Farbstoff verwendet, die Visualisierung also unter Verwendung der Epifluoreszenzmikroskopie durchgeführt. Mit dieser Methode sind nach dem gegenwärtigen Stand die besten Auflösungen zu erzielen, es ist allerdings auch denkbar, das erfindungsgemäße Verfahren mit anderen Methoden durchzuführen (z.B. RAMAN-, Infrarot-, Lumineszenz- und Enhanced-RAMAN-Spektroskopie sowie Radioaktivität), wobei mit Lumineszenz oder Enhanced-RAMAN, vor allem mit Biolumineszenz, prinzipiell ähnliche Auflösungen wie mit der Fluoreszenz-Technologie erzielbar sind.

Als besonders gut geeignet hat sich erfindungsgemäß die Verwendung der 2-Photonen-Anregungs-Fluoreszenzmikroskopie (Sanchez et al., J.Phys.Chem. 101 (38) (1997), Seiten 7020-7023) erwiesen, da mit dieser Methode auch das Problem der Eigenfluoreszenz von vielen Zellen effizient umgangen werden kann.

Weiters ist damit eine praktisch Hintergrund-freie Messung möglich, was auch die HTS-Analyse beschleunigen kann. Die 2-Photonen-Anregungs-Fluoreszenz-Spektroskopie (oder allgemein die Multiphotonen-Anregung (Yu et al., Bioimaging 4 (1996), Seiten 198-207)) ist besonders geeignet zur dreidimensionalen Darstellung von Proben, wodurch ein weiterer Vorteil v.a. bei zellulären Systemen gegeben ist.

Bei der Ausführungsform mit Fluoreszenzspektroskopie umfasst die erfindungsgemäße Vorrichtung vorzugsweise eine oder mehrere der folgenden Komponenten:
- einen Laser als genau definierte Lichtquelle, sowie
- akustooptische Schalter mit hoher Spezifität, mit denen der Laserstrahl schnell (z.B. 10 - 20 nsec.) für definierte Zeit unterbrochen werden kann,
- einen Prozessor, der den Schalter z.B.über ein Pulsprogramm steuert,
- einen dichroitischen Spiegel (der z.B. das anregende Licht nach oben zur Probe reflektiert und das fluoreszente Licht von der Probe nach unten (zum Analysesystem) durchläßt,
- eine Reihe von geeigneten Filtern, die an sich aus herkömmlichen SDT-Vorrichtungen bekannt sind,
- eine bewegbare Probenhalterung (Objektträger), z.B. einen Prozessor-gesteuerten x-y-Drive (Step-Motor),
- eine CCD-Kamera, mit der die emmittierten, durch den dichroitischen Spiegel durchtretenden Lichtquanten in Elektronen umgewandelt und in Pixeln gesammelt werden,
- einen galvanooptischen Spiegel, der das Bild auf vorgewählte (in x-Richtung) nebeneinanderliegende Flächen des Pixelarrays lenkt, senkrecht zur Frameshift-Richtung (y-Richtung),
- ein Prisma, das das Bild in zwei räumlich getrennte Bilder mit orthogonaler Polarisation aufteilt, und
- einen Prozessor, der mit einem x-y-Drive (Step-Motor) die Bewegung der Probe (des Objektträgers) steuert, indem die Signale von der CCD-Kamera über eine interne Uhr zur Triggerung der Bewegung verwendet werden.

Es ist erfindungsgemäß auch möglich, verschiedene Molekülarten mit einem Farbstoff, vorzugsweise einem Fluoreszenz-Farbstoff, stöchiometrisch zu markieren, z.B. einen Rezeptor und einen Liganden, und beide mit der erfindungsgemäßen Vorrichtung zu verfolgen.

Es ist auch möglich, zumindest zwei verschiedene Molekülarten mit verschiedenen Fluoreszenz-Farbstoffen zu markieren, und der SDT-Analyse zu unterziehen, wobei zusätzlich zur jeweiligen Einzelfluoreszenz auch noch durch Ermittlung z.B. des Förster-Transfers zusätzliche Informationen gewonnen werden können (Mahajan et al., Nature Biotech. 16 (1998), Seiten 547-552). Es ist jedoch wesentlich hervorzuheben, dass mit dem Förster-Transfer alleine nur eine (zwar hochselektive) qualitative, jedoch keine quantitative Information möglich ist, da dieser Effekt stark vom Abstand der Fluorophore abhängig ist (mit 1/r⁶).

Wenn zelluläre Systeme erfindungsgemäß untersucht werden sollen, wird vorzugsweise von Zellen geringer Eigenfluoreszenz ausgegangen, wobei es verschiedene Zelltypen gibt, die von vornherein geringe Eigenfluoreszenz aufweisen (wie z.B. Mastzellen oder glatte Muskelzellen). Leider sind aber gerade Expressionszellen in der Regel stark fluoreszierend, weshalb diese oder andere Zell-Typen mit Eigenfluoreszenz durch die gewählten Zuchtbedingungen oder Probenaufbereitungen fluoreszenzarm so bereitgestellt werden müssen, dass die Eigenfluoreszenz unter ein bestimmtes, störendes Maß gedrückt wird. Bei Verwendung von 2-Photonen-Anregung der Fluoreszenz stellt sich dieses Problem, wie erwähnt, jedoch von vorherein nicht.

Durch die erfindungsgemäße Vorrichtung ist die Durchführung eines Visualisierungsverfahrens für einzelne, z.B. biologisch aktive Moleküle, als Hochdurchsatz-Screening von biologischen Einheiten auf der Basis der Beobachtung von einzelnen Molekülen (Fluorophoren) möglich.

"Hochdurchsatz-Screening" (High Throughput Screening - HTS) beschreibt allgemein die Suche nach bestimmten "Einheiten" unter einer sehr großen Zahl ähnlicher "Einheiten" (beispielsweise in einer durch kombinatorische Chemie hergestellten Molekülbank und einer Teilmolekülbank). Diese Problematik stellt sich in vielen Zusammenhängen sowohl der biowissenschaftlichen Grundlagenforschung als auch industriellen Forschung und Entwicklung mit medizinisch-pharmazeutischer Ausrichtung. "Einheiten" können erfindungsgemäß biologische Zellen aber auch einzelne Moleküle oder Molekültypen sein, wobei Hochdurchsatz-Screening z.B. zur Detektion von selten vorkommenden Zellen mit einem bestimmten genetischen Defekt möglich ist. Neben solchen Fragestellungen in der Zellbiologie und Pathologie hat Hochdurchsatz-Screening einen großen Stellenwert in der Molekularbiologie. So kann die erfindungsgemäße Vorrichtung etwa zum Auffinden einzelner DNSoder c-DNS-Moleküle in einer Probe mit vielen DNS-Molekülen verwendet werden. In der Biochemie ist die Abtrennung von Makromolekülen bestimmter Eigenschaften, z.B. bezüglich Ligandenbindung oder Phosphorylierungszustand in oder an Zellen, ein grundsätzliches Anliegen, welches erfindungsgemäß behandelt werden kann. Die Pharmaindustrie benötigt Hochdurchsatz-Screening sowohl zur Selektion bestimmter Wirkstoffe als auch zur Analyse ihrer Wirkung an biologischen Zellen. Was unter HTS-Verfahren fällt bzw. welche Materialien hierfür angewendet werden (z.B. durch kombinatorische Chemie hergestellte Molekül-Bibliotheken oder genomisch-kombinatorische Bibliotheken) sind jedem Fachmann auf diesem Gebiet geläufig (siehe z.B. "High Throughput Screening", John P. Devlin (Hrg.) Marcel Dekker Inc. (1997)).

Zur spezifischen Markierung bestimmter "Einheiten" werden erfindungsgemäß zumeist die natürlichen Prinzipien der strukturspezifischen molekularen Erkennung eingesetzt, etwa die Bindung von Antikörpern oder generell von Liganden an Rezeptormoleküle. Die erfindungsgemäß bevorzugte Verwendung von fluoreszierenden Liganden, etwa Antikörper mit gebundenen Fluoreszenzmolekülen, erlaubt eine zugleich empfindliche und selektive Detektion von Einheiten mit Rezeptoren für die Fluoreszenz-markierten Liganden. Alternativ zu fluoreszierenden Liganden können fluoreszierende Gruppen in Proteinsequenzen inseriert und co-exprimiert werden (z.B. das "green fluorescence protein"(GFP) oder Abwandlungen davon ("blue fluorescence protein"-BFP)).

Erfindungsgemäß ist unter Verwendung von Fluoreszenz ein Hochdurchsatz-Screening mit zugleich ultimativer Empfindlichkeit (also klarer Detektion der Fluoreszenz einzelner Fluoreszenz-Marker) und hoher Durchsatzrate (also zumindest 10⁶ (zelluläre) Einheiten pro Inch² pro Stunde) realisierbar. Chemische Einheiten (z.B. biologische Moleküle, wie Rezeptoragonisten oder - antagonisten) können problemlos mit einer Durchsatzrate von zumindest 10¹⁰ oder 10¹² Einheiten pro Stunde pro Inch² untersucht werden.

Bei Verwendung von Zellen in einer HTS-Methode sind vor allem Mikrotiterplatten geeignet, mit welchen ein Arzneimittel-Screening an ganzen Zellen durchgeführt werden kann, indem z.B. die Zellen in die einzelnen Näpfchen, die die zu screenenden Substanzen enthalten, titriert werden (vgl. z.B. WO98/08092). Auch die verwendung bzw. Vermessung von Biochips (Nature Biotech 16 (1998), 981-983) ist mit dem erfindungsgemäßen System möglich.

Mit dem erfindungsgemäßen HTS-Verfahren können Substanzen als pharmazeutische Zielsubstanzen identifiziert und isoliert werden, die neu sind oder für die bislang noch keine pharmazeutische Wirkung nachgewiesen werden konnte. Die so erhaltenen Substanzen können zu einer pharmazeutischen Zusammensetzung aufgearbeitet werden, wobei die identifizierten und isolierten Substanzen mit einem pharmazeutisch akzeptablen Träger gemischt werden.

Erfindungsgemäß gilt eine klare Detektion dann als gegeben, wenn der bestimmte Mindest-Signal/Rausch-Abstand für einzelne Moleküle über 3, vorzugsweise zwischen 10 und 40, insbesondere zwischen 20 und 30, liegt. Wenn der Signal/Rausch-Abstand unter einem Wert von etwa 2 bis 3 liegt, so kann der Informationsgehalt der erhaltenen Messung problematisch zu interpretieren sein.

Eine spezifische Variante des erfindungsgemäßen Verfahrens stellt die Kombination mit der Flow-Cytometrie-Technologie dar, bei welcher die Zellen mittels eines Flow-Cytometers am Detektions- und Analysesystem vorbeibewegt werden. Im einfachsten Fall wird bei einer bevorzugten Variante der erfindungsgemäßen Vorrichtung eine Durchflusszelle mit dem Objektträger (oder als Objektträger selbst) vorgesehen.

Die erfindungsgemäße Vorrichtung eignet sich wie erwähnt besonders zur Analyse von Proben, welche biologische Zellen umfassen, wobei besonders HTS-Verfahren effizient mit der erfindungsgemäßen Vorrichtung durchgeführt werden können. Jedoch ist das Anwendungsspektrum der erfindungsgemäßen Vorrichtung auch auf zellfreie Systeme., höchst effizient anwendbar.

Bei der erfindungsgemäßen Vorrichtung wird die Relativverschiebung zwischen Probe und hochempfindlichem (hochaufiösendem) Detektions- und Analysesystem bevorzugterweise dann durch das Detektions- und Analysesystem selbst, insbesondere von der CCD-Kamera, gesteuert, wenn diese Relativverschiebung kontinuierlich erfolgen soll, was vor allem bei lateralem Scan Vorteile hat.

Da die Fluoreszenzanalyse derzeit die besten Analysen ergibt, umfasst die erfindungsgemäße Vorrichtung bevorzugterweise ein EPI-Fluoreszenzmikroskop. Weiters kann die Steuerung der kontinuierlichen Relativverschiebung über den Frameshift der CCD-Kamera getriggert werden, wobei die Steuerung direkt durch die CCD-Kamera oder aber parallel durch einen Synchronisationsmechanismus (z.B. ortskorreliert über Photodioden-Triggersignale unter Verwendung eines mitbewegten Lochstreifens, wie z.B. in Meyer et al., Biophys J. 54 (1988), S. 983-993, beschrieben) erfolgen kann.

Eine bevorzugte Ausführungsform der vorliegenden Erfindung zeichnet sich daher dadurch aus, dass die Probenbewegung und der Frameshift der CCD-Kamera durch ortskorrelierte Signale an Hand der kontinuierlichen Probenbewegung miteinander synchronisiert werden, vorzugsweise unter Verwendung eines mit der Probe bewegten Lochstreifens und einer fixen Photodiode, die beim Passieren eines Loches ein Signal gibt.

Gemäß einem weiteren Aspekt betrifft die vorliegende Erfindung ein Verfahren zur Visualisierung von Molekülen, von Wechselwirkungen zwischen Molekülen und von molekularen Prozessen in einer Probe unter Verwendung der SDT-Methode unter Verwendung einer erfindungsgemäßen Vorrichtung.

Die vorliegende Erfindung betrifft daher auch ein Verfahren zur Visualisierung von Molekülen, von deren Bewegung und von Wechselwirkungen zwischen Molekülen und von molekularen Prozessen in einer Probe, wobei eine Probe, in welcher bestimmte Moleküle mit Markermolekülen markiert worden sind, in eine erfindungsgemäße Vorrichtung eingebracht wird, die Probe durch die CCD-Kamera auf ein Pixelarray abgebildet wird, wobei die Probe und das Detektions- und Analysesystem relativ zueinander unter Benutzung des Frameshifts der CCD-Kamera verschoben werden, so dass die Signale jedes Einzelmoleküls in der Probe nach Konversion in Elektronen in den gleichen Pixeln gesammelt werden, so lange, bis das Einzelmolekülsignal einen bestimmten Mindest-Signal/Rausch-Abstand übersteigt.

Bevorzugterweise wird dabei die Relativbewegung der Probe direkt entsprechend dem Frameshift der CCD-Kamera gesteuert, wobei die Relativbewegung der Probe in lateraler Richtung, bevorzugterweise konstant und kontinuierlich, erfolgt.

Gemäß einem weiteren Aspekt betrifft die vorliegende Erfindung ein Verfahren zur quasi-gleichzeitigen Abbildung Fluoreszenzmarkierter Moleküle in ihrer Verteilung über ganze biologische Zellen (bzw. biologische Systeme) und zur Verfolgung von molekularen Bewegungen und Prozessen durch Wiederholung dieser Abbildung in zeitlichen Abständen unter Verwendung des SDT-Verfahrens, welches sich dadurch auszeichnet, dass eine Probe mit Zellen, in welchen bestimmte Moleküle mit Markermolekülen markiert worden sind, in eine erfindungsgemäße Vorrichtung eingebracht wird, das Fluoreszenzbild für eine Fokussierungsebene auf dem Pixelarray der CCD-Kamera abgebildet wird, die Fokussierungsebene schrittweise entlang der z-Richtung durch ein Piezoelement verschoben wird, wobei die Fluoreszenzbilder zu jeder Ebene separat auf dem Pixelarray angeordnet werden, und nach Abbildung sämtlicher Fokussierungsebenen die Abbildung der Fluoreszenz-markierten Moleküle in den Zellen errechnet wird, worauf gegebenenfalls die Abbildungen der Fokussierungsebenen wiederholt werden, um molekulare Bewegungen und Prozesse durch Aneinanderreihen von Abbildungen sämtlicher Fokussierungsebenen darzustellen.

Mit diesem Verfahren kann mit der erfindungsgemäßen Vorrichtung nicht nur die Detektion einzelner Moleküle auf Zelloberflächen oder in Zellen erfolgen, sondern die Vorgänge in (lebenden) Zellen bis hin zu molekularen Bewegungen und Prozessen in räumlicher und zeitlicher Hinsicht verfolgt werden. Damit ist es erstmals möglich geworden, lebende Zellen in "Real-Time" abzubilden und dadurch molekulare Prozesse in und auf diesen Zellen zu beobachten.

Diese Methode ist selbstverständlich nicht nur für ganze Zellen anwendbar sondern auch für die Beobachtung von Prozessen in sämtlichen biologischen Systemen, wie z.B. in isolierten Zellmembranen oder in synthetischen Zellkompartimenten oder synthetischen Membranen, in denen biologische Moleküle eingebaut sind (all diese Systeme fallen erfindungsgemäß auch unter den Begriff "biologische Zellen").

Bevorzugterweise erfolgt die Abbildung auf dem Pixelarray der CCD-Kamera vor allem beim 3D-Scan der Zellen mit einer Rate von 1 bis 3 ms pro Bild und einer Kapazität von bis zu 300 Bildern pro Array bei einer Bildgröße von 80 x 80 Pixeln. Andere Einstellungen können aber je nach CCD-Kamera, Lichtquelle, etc., abhängig von diesen Einzelkomponenten von einem Fachmann ohne weiteres optimiert werden.

Mit den erfindungsgemäßen Vorrichtungen und den erfindungsgemäßen Verfahren kann nicht nur ein einziger Fluoreszenz-Marker eingesetzt werden, sondern die Verwendung von zwei oder mehr Fluoreszenz-Markern ist ohne weiteres möglich. Beispielsweise kann das in der US 5 815 262 beschriebene System vom Prinzip her auch erfindungsgemäß Anwendung finden.

Gemäß einer bevorzugten Ausführungsform betrifft die vorliegende Erfindung auch ein Verfahren, bei welchen mindestens zwei verschiedene Arten von Molekülen in der Probe, insbesondere in der Zelle, mit mindestens zwei verschiedenen Fluoreszenz-Markern markiert werden, und dann nicht nur die Bewegung eines Moleküls im System, sondern auch die Relativbewegung der verschiedenen Moleküle im System abgebildet, und räumlich und zeitlich verfolgt werden können.

Bevorzugterweise erfolgt die Fluoreszenz-Abbildung für zwei orthogonale Polarisationsrichtungen für jeden Fluoreszenz-Marker durch Teilung der Abbildung in zwei Bilder mit orthogonaler Polarisationsrichtung. Dies kann durch Verwendung eines Wollaston-Prismas und einer Abbildungsoptik, die einen Parallelstrahlbereich aufweist, ermöglicht werden, wobei das Wollaston-Prisma im Parallelstrahlbereich der Lichtquelle eingesetzt wird.

Es kann zusätzlich auch ein galvanooptischer Drehspiegel im Parallelstrahlbereich, beispielsweise eines Epifluoreszenzmikroskops, eingesetzt werden.

Durch Einsatz des Drehspiegels und des Wollaston-Prismas können beim 3D-Scan aufeinanderfolgende Bilder der Fokussierungsebenen mit beiden Polarisationsanteilen separat nebeneinander auf der ganzen Breite des Pixelarrays der CCD-Kamera gespeichert werden. Diese Bildfolge kann durch Frameshift als Ganzes um eine Bildbreite verschoben werden, woraufhin die nächste Bildfolge durch Spiegeldrehung gespeichert wird, solange, bis entweder genügend Information gesammelt ist oder der Pixelarray vollgeschrieben ist. Hierauf kann die gesamte Information zur Verarbeitung zu einem 3D-Bild ausgelesen werden und die Kamera ist frei für die nächste 3D-Aufnahme.

Die Positionierung und Verschiebung der Abbilder zu jeder Probenposition auf dem Pixelarray der CCD-Kamera für unterschiedliche Fluoreszenzphasen und zwei Polarisationsrichtungen kann dabei von der Steuereinheit mittels Pulsgeber und entsprechender Software vorgenommen werden.

Bevorzugterweise werden in der Probe Zellen mit geringer Eigenfluoreszenz verwendet.

Bevorzugterweise wird das erfindungsgemäße Verfahren als Hochdurchsatzanalyse durchgeführt, wobei beispielsweise als Probe eine Molekülbank untersucht werden kann, vorzugsweise eine durch kombinatorische Chemie hergestellte Molekülbank. Erfindungsgemäß kann dabei auch die Wechselwirkung einer ganzen Molekülbank mit biologischen Zellen untersucht werden.

Die Anwendungsgebiete für die vorliegende Erfindung sind praktisch unbegrenzt, bevorzugt sind aber die Pharmazie (vor allem das HTS von neuen chemischen Einheiten) sowie biochemische Fragestellungen, da durch die extrem hohe Empfindlichkeit der erfindungsgemäßen Methodik (ein einzelnes Molekül kann verfolgt werden) und die genaue Lokalisation (z.B. auf mindestens 30 nm genau) im Prinzip jedes einzelne Molekül oder Molekülassoziat, z.B. auf oder in Zellen detektiert und identifiziert (gegebenenfalls auch isoliert) werden kann. So ist die Bindung aller natürlicher Liganden an eine Zelle (Hormone, primäre Botenstoffe, etc.) oder Zell-Zell-Erkennungsmoleküle mit nmolarer Bindung analysierbar, auch hinsichtlich der exakten Bindungskinetik und Bindungskonformation, sowie hinsichtlich der Mobilität dieser Komponenten in der Zelle oder der Zellmembran (analog zu Schmidt et al., J.Phys.Chem. 99 (1995), Seiten 17662-17668 (für Molekülpositions- und -bewegungsbestimmung); Schütz et al., Biophys. J. 73 (1997), Seiten 1-8; Schmidt et al., Anal.Chem. 68 (1996), Seiten 4397-4401 (zu stöchiometrischen Bestimmungen); Schütz et al., Optics Lett. 22(9), Seiten 651-653 (bzgl. Konformationsänderungen).

Weiters eignet sich das erfindungsgemäße System besonders gut zur Untersuchung und Identifizierung bzw. Isolierung von (alternativen) Bindungspartnern in Rezeptor-Ligand oder Virus-Rezeptor-Systemen, wobei auch potentielle Agonisten/Antagonisten und deren Wirkung (z.B. die kompetitive Hemmung) genau untersucht werden kann. Dies ist insbesondere bei der Auffindung von neuen chemischen Einheiten (NCE) im Bereich des Arzneimittel-Screenings wesentlich.

Bei der Untersuchung ganzer Zellen kann die Fokus-Ebene variiert werden, bei einer schnellen Variante wird ein Schnitt durch die Zelle (vorzugsweise durch die obere Zellhälfte; "unten" ist die dem Objektträger zugewendete Seite) untersucht. Damit ist es auch möglich, komplexe Prozesse in einer Zelle, wie Nukleopor-Transport, Pharmaka-Wirkung mit einem Target in der Zelle oder Sekundärreaktionen in der Zelle, auf einzelmolekularem Niveau zu untersuchen.

Gemäß einer bevorzugten Ausführungsform kann das erfindungsgemäße System auch zur Untersuchung von 3-dimensional (3D) ablaufenden Prozessen in einzelnen Zellen verwendet werden, etwa von Zellen, die in einem ersten erfindungsgemäßen Flächen-Scan vorselektiert wurden. Hierbei kann durch eine kontinuierliche oder diskrete Verschiebung der Fokusebene entlang der z-Achse, zusätzlich zu der erfindungsgemäßen Vorgangsweise (Probenverschiebung mit synchronisiertem Frameshift der CCD-Kamera) die dreidimensionale Anordnung von Fluoreszenz-markierten Molekülen bzw. Assoziaten an oder in der Zelle abgebildet werden, in Messzeiten im Sekundenbereich oder sogar darunter, mit einer Ortsauflösung nahe am Diffraktions-Limit. Im Vergleich zu der bislang einzigen anderen Methode, der Confocal Scanning Fluorescence Microscopy, CSFM (Handbook of Biological Confocal Microscopy, ed. James B. Pawley, second edition (1995), Plenum Press, New York und London), ist die dargestellte erfindungsgemäße oben genannte Methode erstens um zumindest einen Faktor 1000 schneller, da gleichzeitig die Information mit gleicher Auflösung von zumindest 1000 Fokusflächen gesammelt werden kann, wodurch zweitens erstmalig die räumlich-zeitliche Anordnung von nicht-statischen Molekülen bzw. Assoziaten abgebildet werden kann, in Zeiten (z.B. 1 s), die klein genug sind, um Diffusionsprozesse, Energie-getriebene Bewegungsvorgänge oder metabolische Abläufe beobachten zu können.

In einer bevorzugten Ausführungsform ist daher die Fokussierungsebene des Detektions- und Analysesystems (insbesondere des Epifluoreszenzmikroskops) entlang der z-Richtung (also normal zur x-y-Ebene, die durch die Probenfläche (den Objektträger) definiert ist) gegebenenfalls zusätzlich zur Relativbewegung zwischen Probe und Detektions- und Analysesystem verschiebbar.

Hierbei wird 3D-Imaging, vorzugsweise durch Aufnahmen von diskreten aufeinanderfolgenden Fokusebenen in z-Richtung, in schneller zyklischer Widerholung, während kontinuierlicher Relativbewegung zwischen Probe und CCD-Kamera durchgeführt, durch parallele Ablage der Bilder verschiedener z-Ebenen auf dem Pixelarray unter Einsatz das galvanooptischen Spiegels. Somit können wesentliche Vorteile beider Aufnahmeverfahren kombiniert werden, was vorzugsweise für zelluläres HTS Anwendung findet, aber auch generell für molekular-mechanistische Fragen der Zell-Biologie, -Physiologie und -Pharmakologie.

Vorzugsweise kann der x-y-Scan und das 3D-Imaging daher gleichzeitig erfolgen. Hierzu können die Bilder jeder z-Ebene durch Einsatz des galvanooptischen Drehspiegels nebeneinander abgelegt werden. Pro Beleuchtungszeit jedes Fluorophors beim langsamen x-y-Scan werden mehrere z-Zyklen durchfahren. Durch diese Kombination wird der x-y-Scan langsamer, und zwar um den Faktor der Zahl der z-Ebenen.

Das erfindungsgemäße Verfahren und die erfindungsgemäße Vorrichtung eignen sich auch besonders gut für die Detektion der spezifischen Bindung von markierten Nukleinsäuren auf sogenannten Arrays. Dabei werden eine Vielzahl von verschiedenen Nukleinsäuren (z.B. cDNAs, ESTs, genomische Abschnitte mit verschiedenen Mutationen (SNPs)) in regelmäßigen Mustern auf einer Oberfläche (z.B. Kunststoff oder Glas) immobilisiert. Diese Arrays werden dann mit der zu testenden Probe mit Fluoreszenz-markierten Nukleinsäuremolekülen inkubiert, wobei Moleküle aus der Probe spezifisch mit ihren homologen Gegenstücken hybridisieren können. Dies kann mit verschiedenen Markern an derselben Probe wiederholt werden. Die Auswertung dieser Bindungsereignisse erfolgte bislang im Stand der Technik oft mit Scannern oder Imaging-Verfahren, die eine relativ geringe Auflösung und Empfindlichkeit haben. Das erfindungsgemäße System bietet hier aber deutliche Vorteile, da zu der ultimativen Empfindlichkeit des erfindungsgemäßen Verfahrens auch die enorme Geschwindigkeit sowie die hohe räumliche Auflösung der erfindungsgemäßen SDT-Analyse hinzukommt. Es ist daher ohne weiteres möglich, Systeme, wie sie etwa in der WO 97/43611 beschrieben werden, mit dem erfindungsgemäßen System zu adaptieren und erfindungsgemäß zu analysieren.

Dies bietet vor allem dann Vorteile, wenn die Konzentration der markierten Proben-Nukleinsäuren sehr gering ist. So können etwa mRNAs, die in sehr geringer Kopienanzahl in der Zelle vorkommen (Low abundance mRNAs), zuverlässig mit einem geeigneten Array nachgewiesen werden. Weitere Anwendungen dieses spezifischen Aspektes der vorliegenden Erfindung betreffen Fragestellungen, bei denen die Menge an Proben-Nukleinsäuren sehr gering ist, wie etwa in der forensischen Spurenanalytik oder bei einer Analyse von Embryo- oder Stammzellen.

Weiters eignet sich das erfindungsgemäße Verfahren besonders für den Nachweis von Nukleinsäuren bei der sogenannten "in situ-Hybridisierung". Dabei werden Gewebeschnitte mit einer markierten Probe inkubiert. Die spezifische Bindung dieser Proben-Nukleinsäure erlaubt eine Aussage, welche mRNAs in welchen Bereichen des Gewebeschnittes exprimiert werden. Da diese zu detektierenden mRNAs oft in sehr geringer Kopienanzahl vorliegen, ist eine hohe Empfindlichkeit des Detektionssystems, wie sie durch das erfindungsgemäße Verfahren bereitgestellt wird, von Vorteil.

Analog zur in situ-Hybridisierung mit Nukleinsäuren können als Probenmoleküle auch biorekognitive Moleküle, wie Antikörper, verwendet werden, wobei hier dann die von den Antikörpern erkannten Epitope (z.B. bestimmte Eiweißmoleküle) mit großer Empfindlichkeit nachgewiesen werden können.

Desgleichen kann das erfindungsgemäße Verfahren bei der Analyse von Chromosomen verwendet werden. Dabei werden Chromosompräparationen auf einem Träger hergestellt und diese mit einer entsprechenden Nukleinsäureprobe inkubiert. Der Nachweis einer spezifischen Bindung erlaubt einen Rückschluß auf die Lokalisierung von einzelnen Genen auf den Chromosomen.

Die Erfindung wird anhand der nachfolgenden Beispiele sowie der Zeichnungsfiguren näher erläutert, ohne jedoch darauf eingeschränkt zu sein.

Es zeigen:
- Fig. 1:: die gebräuchlichen Konfigurationen von Einheiten für Hochdurchsatz-Screening;
- Fig. 2:: eine Möglichkeit der erfindungsgemäßen Vorrichtung;
- Fig. 3:: die Relativbewegung der Probe mit Frameshift;
- Fig. 4:: das Screening von Einheiten auf Oberflächen oder in Multiwell-Platten;
- Fig. 5:: das Screening in einer Laminarflusszelle;
- Fig. 6:: die Relation zwischen Screening-Zeit und Auflösung; (für typische Charakteristika von CCD-Kameras (gekühlt mit flüssigem N₂): 1300*1340 Pixel (250*250 µm) "lineshift"-Rate 300 KHz, Ausleserate 1 MHz, Auslese rauschen ∼7 counts pro Pixel, Dunkelrauschen ∼ 0. Objektiv mit 40-facher Vergrößerung, Beleuchtete Fläche = Fläche Pixelarray/40*40 = 400 µm * 100 µm; Lichtintensität auf 250 counts pro Fluorophor gehalten.)
- Fig. 7:: die Analyse von detektierten Einheiten;
- Fig. 8:: die Positionen von markierten Molekülen und das zeitliche Verfolgen von Molekülpositionen;
- Fig. 9:: die molekulare Assoziation, Co-Lokalisation, Stöchiometrie aus Signalquantelung;
- Fig. 10:: die Konformationsänderung am Einzelmolekül;
- Fig. 11:: die Ligandenbindung;
- Fig. 12-13:: die Ko-Lokalisation zweier verschieden markierter Liganden durch Energietransfer (Fig. 12), oder durch Vergleich der Positionen der beiden Farbstoffmoleküle (Fig. 13);
- Fig. 14-18:: die Detektion von einzelnen Lipidmolekülen in nativen Zellen.
- Fig. 19:: die Mikroskopie einzelner Lipidmoleküle mit 2-Photonen-Fluoreszenz-Anregung;
- Fig. 20A,: B und C: die dreidimensionale Aufnahme einer ausgewählten Einzelzelle mit Einzelfluorophor-Auflösung;
- Fig. 21:: eine erfindungsgemäße Vorrichtung, geeignet für die 3D-Analyse ganzer Zellen;
- Fig. 22:: das Einlesen der Abbildungen in den Pixelarray der CCD-Kamera;
- Fig. 23:: den Arbeitsmodus beim großflächigen Screening.

### Beispiele :

### Beispiel 1: Erfindungsgemäße Vorrichtung unter Verwendung der Fluoreszenzmikroskopie

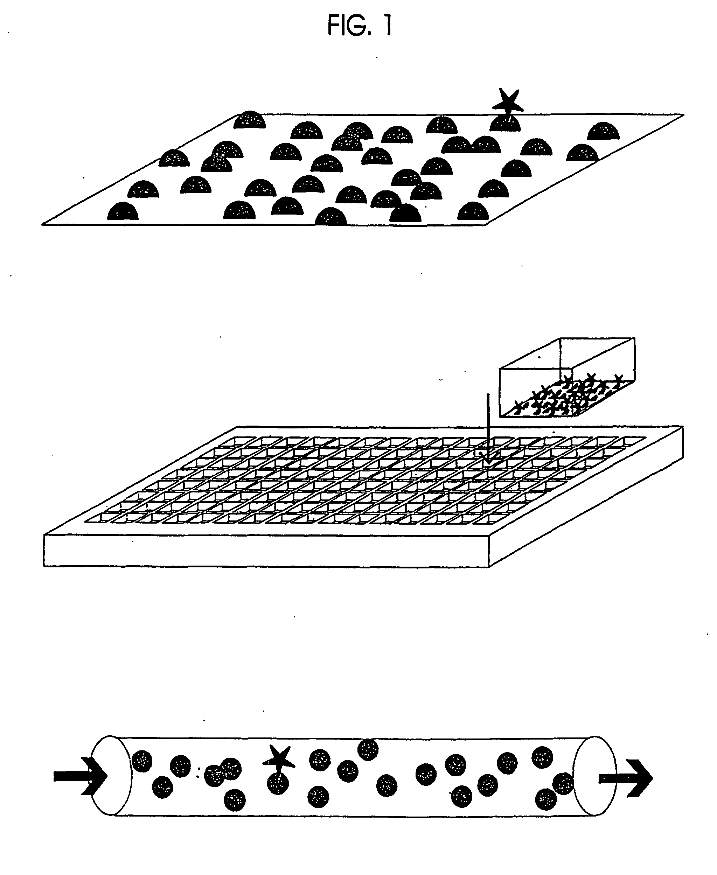

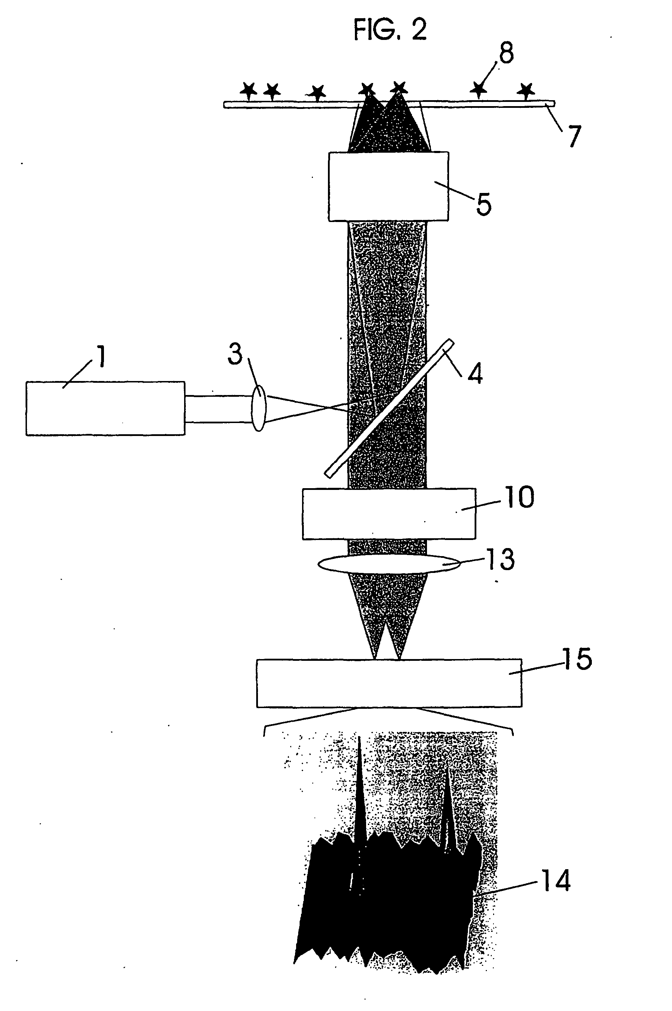

Gebräuchliche Konfigurationen von Einheiten für Hochdurchsatz-Screening (HTS) sind in Fig. 1 dargestellt, die alle als Messanordnungen im erfindungsgemäßen Verfahren zur Anwendung kommen. Übliche Molekülbanken, die durch kombinatorische Chemie hergestellt werden, sind auf kleinen (0,2 bis 0,4 mm) Polymerkügelchen aufgebaut, die jeweils eine einzige Molekülspezies tragen (siehe z.B. Devlin (1997), Seiten 147-274). Die Messanordnung geht gemäß der oben beschriebenen Ausführungsform von einem herkömmlichen Fluoreszenzmikroskop (Fig. 2) aus, mit dem an einer Substratoberfläche (7) in der beleuchteten Fläche (∼ 100 µm²) anwesende Fluorophore (8) einzeln detektiert und in ihrer Bewegung verfolgt werden konnten, mit einem Signal-zu-Rausch-Abstand von ∼30 für einzelne Fluorophore (publiziert in Proc. Natl. Acad. Sci., USA (1996) 93: 2926-2929). Ein Zeiss-Mikroskop (Axiovert 135-TV) mit einem x 100-Objektiv (5) (Neofluar; numerische Öffnung = 1,3, Zeiss) wurde verwendet. Für die Fluoreszenzanregung wurde das Laserlicht der 514 nm-Linie eines Argon⁺-Lasers (1) (Innova 306, kohärent), welcher in TEM₀₀-Mode betrieben wurde, durch einen akustooptischen Modulator (1205C-1; Isomet) in den Epiport des Mikroskops gekoppelt. Eine λ/4-Platte lieferte zirkular-polarisiertes Anregungslicht. Unter Verwendung einer defokussierenden Linse (3) (f = 100 mm) vor dem dichroisehen Spiegel (4) 515DRLEXT02; Omega) wurde das Gauß'sche Anregungsprofil auf 6,1 ± 0,8 µm Gesamtweite bei halbem Maximum (full-width-at-half-maximum; FWHM) und 57 ± 15 kW/cm² mittlere Anregungsintensität gesetzt. Die Beleuchtungszeit für jede Pixelarray-Abbildung war 5 ms. Nach long-pass-Filterung (10) (570DF70 Omega und OG550-3 Schott) wurde die Fluoreszenz durch eine Linse (13) auf eine mit flüssigem Stickstoff gekühlte CCD-Kamera (15) (AT200, 4 Counts/Pixel read-out noise; Photometrix), ausgestattet mit einem TH512B-Chip (14) (512 x 512 Pixel, 27 µm² Pixelgröße; Tektronix) abgebildet. Die Punkttransferfunktion des Mikroskops wurde durch eine zweidimensionale Gauß'sche Intensitätsverteilung mit einer Weite von 0,42 µm FWHM, beschrieben wie durch Bestimmung von Bildern von 30 nm fluoreszenten Kügelchen (Molecular Probes) festgestellt wurde. Die beugungsbegrenzte Fläche betrug daher 0,14 µm². Die Breite von Intensitätsprofilen für Einzelmoleküle war mit 0,48 ± 0,08 µm FWHM größer als die Punkttransferfunktion des Mikroskops, wobei die zusätzliche Verbreiterung durch molekulare Diffusion verursacht wurde. Die CCD wurde als Speichermittel verwendet, wobei 12 aufeinanderfolgende Bilder von 40 x 40 Pixel genommen wurden, und durch CCD-Frameshift bis zu 140 Pixelarrays pro Sekunde aufgenommen werden konnten. Dieser Frameshift wird erfindungsgemäß zur kontinuierlichen Bewegung eines Objektträgers verwendet.

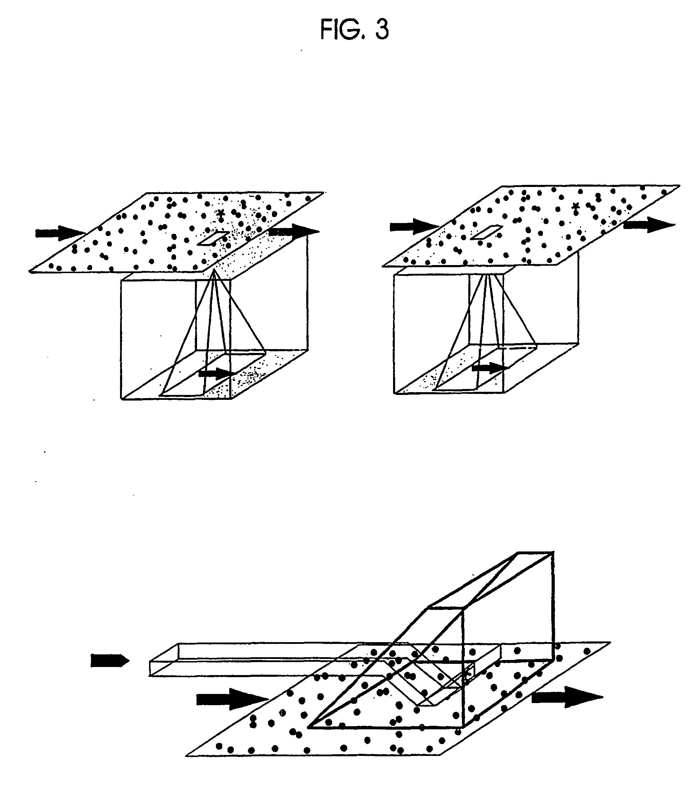

Gemäß der vorliegenden Erfindung kann dieses Messprinzip auf biologische Proben mit fluoreszierenden Liganden in Konfigurationen zur Anwendung kommen, wie in Fig. 1 dargestellt. Gemäß der erfindungsgemäßen apparativen Realisation wird ein Probenscreening ermöglicht, das mit maximierter Durchsatzrate eine konstante Einzelfluorophor-Empfindlichkeit aufweist. Die Grundidee ist nochmals in Fig. 3 erläutert. Bei konstanter Beleuchtung einer Fläche, die auf den ganzen verwendeten Pixelarray abgebildet wird, wird die Probe kontinuierlich verschoben und gleichzeitig das Bild der Probe auf dem Pixelarray durch kontinuierlichen "frame shift, line per line". Bei möglichst genauer Abstimmung beider Geschwindigkeiten (v (sample) = v (CCD)/Vergrößerung des Objektivs) wird die von einem Fluorophor der Probe gesammelte Fluoreszenz während des Durchquerens des beleuchteten Bereichs von praktisch den gleichen Pixeln gesammelt.

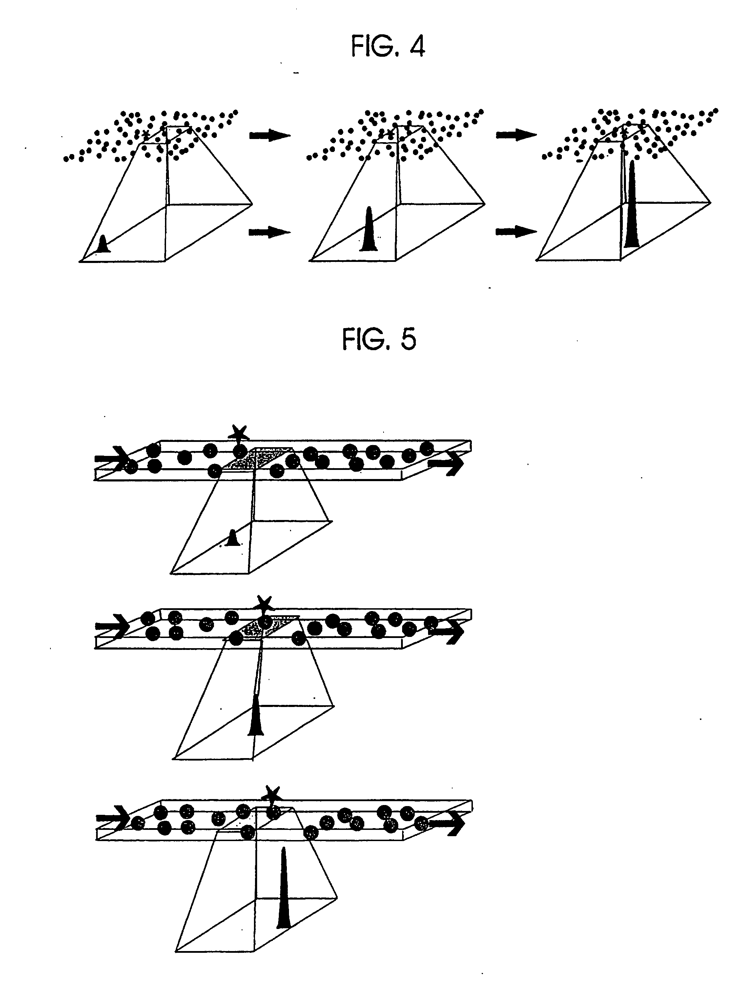

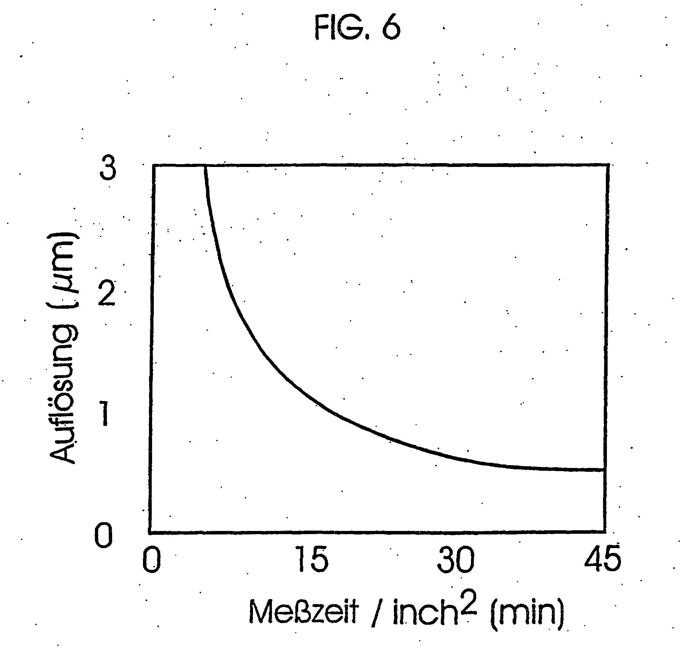

Das kumulierende Bild eines Fluorophors bis zum Erreichen der Ausleseseite des Pixelarrays ist in Fig. 4 und 5 für Screeningkonfigurationen gemäß Fig. 1 skizziert. Die Optimierung der zahlreichen apparativen Variablen und Parameter ist für den Fachmann analog zu den bekannten Verfahren möglich; das Verhältnis zwischen Auflösung und Messzeit ist in Fig. 6 gezeigt: Für typische Charakteristika von erhältlichen CCD-Kameras, Lichtquellen und Objektiven wurde die Messzeit für das Screening einer 1 inch² großen Fläche berechnet, als Funktion der Auflösung. Grundsätzlich gibt es einen scharfen Bereich des optimalen Zusammenhangs zwischen Messzeit und Auflösung, der in dem gewählten Beispiel im Bereich von Messzeiten von 15 bis 30 min für 1 Inch²-(6,45 cm²) Probefläche liegt, bei einer Auflösung von 1 - 0,5 µm. Der Arbeitspunkt auf dieser Kurve wird durch "binning" eingestellt. Hierbei wird die Information von benachbarten Pixeln zusammengezogen (etwa von b x b Pixeln), wodurch die Auflösung sinkt, bei steigender maximaler Geschwindigkeit v (frame shift) der CCD-Kamera und leicht ansteigender Empfindlichkeit. Letzteres basiert darauf, dass das Rauschen nur durch Ausleserauschen gegeben ist, und somit gleich groß ist für das Auslesen der Counts in einem einzelnen Pixel wie für das Auslesen der Counts in b x b Pixeln. Die Abbildungsqualität einzelner Fluorophore bleibt somit wesentlich während des Screenings erhalten (im Beispiel gemäß Fig. 6 werden 250 Counts pro Fluorophor gesammelt bei 5 Counts Ausleserauschen).

Durch die kontinuierliche Probenbewegung wird die Wartezeit minimiert, die bei diskontinuierlicher Probenbewegung notwendig ist, auf Grund entstehender Bewegung in der Probe bei Geschwindigkeitsänderungen. Lediglich nach Beendigung eines Linienscans muß die Probe zurückgeführt und um die Breite der beleuchteten Fläche verschoben werden, zur Aufnahme des nächsten Linienscans (im Beispiel in Fig. 6 wurde hierfür 1 s Wartezeit erlaubt).

Die erfindungsgemäße Kombination von ultimativer Empfindlichkeit und vergleichsweise sehr schnellem Probendurchsatz eröffnet neue Anwendungsbereiche. Mit einer Screeningzeit von ∼15 min einer Probe typischer Größe ist ein Zeitbereich erreicht, der Screening unter i.A. konstanten Bedingungen der Proben erlaubt. Proben mit entsprechend geringer Lebensdauer können untersucht und die detektierten Einheiten weiterverwendet oder analysiert werden. Dies eröffnet desweiteren die Verwendung einer breiten Palette von Fluoreszenzliganden mit entsprechend schnellen Dissoziationsraten (etwa schwach bindene Antikörper). Die gleichzeitige Einzelfluorophor-Empfindlichkeit erweitert den Anwendungsbereich grundsätzlich auf Fragestellungen, in denen markierte Stellen pro gesuchter Einheit in geringer Zahl zu erwarten sind (bis zu einer einzigen Stelle, etwa beim Auffinden einer Mutation in einer DNS-Probe).

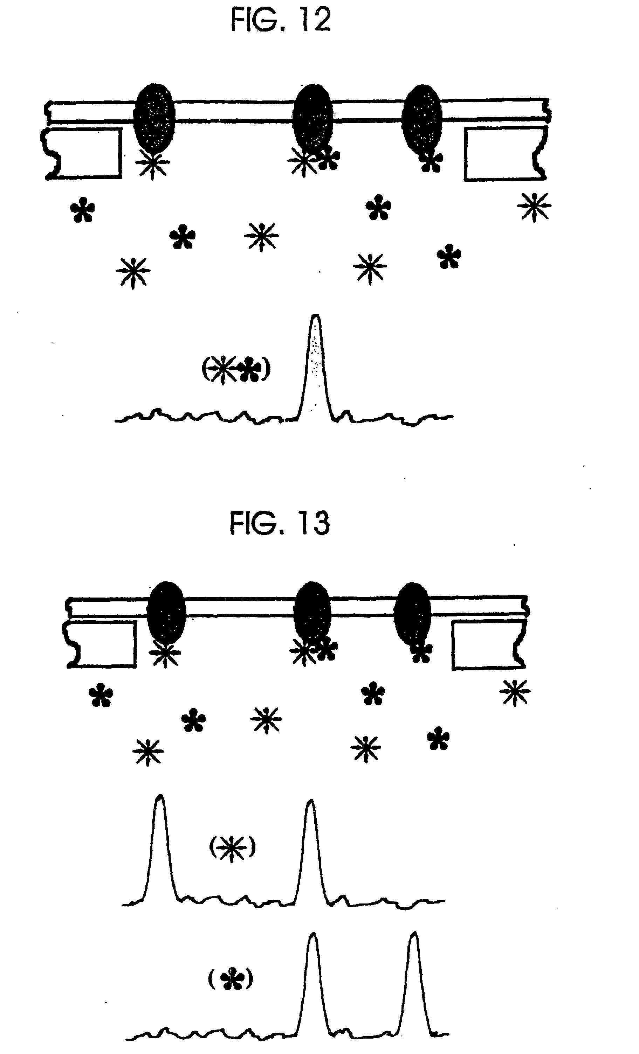

Erfindungsgemäß kann das beschriebene schnelle und empfindliche Screening noch mit hoher Selektivität und Spezifität verbunden werden. Hierzu wird selektive Anregung der Fluoreszenz-Marker durch 2-Photonen-Absorption eingesetzt, wodurch die gesammelte Fluoreszenz nahezu vollständig nur von den so angeregten Fluoreszenz-Markern in der Fokusfläche stammt. Bei einer weiteren Vorgangsweise werden zwei Fluoreszenz-markierte Liganden gleichzeitig eingesetzt, die beide an der Zielstruktur benachbarte Bindungsplätze haben. Dies kann z.B. ein natürlicher Ligand eines nur in der gesuchten Einheit vorkommenden Rezeptors sein zusammen mit einem Antikörper, der am Rezeptormolekül in der Nähe des Liganden bindet. So wie in Fig. 12 skizziert ist, wird bei selektiver Anregung eines der beiden Fluorophore (Donor) und Sammlung der Fluoreszenz (durch entsprechende optische Filter) nur des zweiten Fluorophors (Akzeptor) nur die durch Energietransfer von Donor zum Akzeptor entstandene Fluoreszenz detektiert. Hierzu müssen beide Fluorophore in unmittelbarer Nähe sein (≤ 8 nm Abstand). So werden spezifisch an Rezeptoren gebundene Ligandenpaare einzeln und höchst selektiv detektierbar (bei immer noch großem Signal/Rausch-Abstand). Alternativ können separate Bilder beider Farbstoffe aufgenommen werden (nur 5 ms zeitverschoben, siehe Fig. 13). Ko-lokalisierte Farbstoffmoleküle (innerhalb der Positionsgenauigkeit von ∼50 nm) erlauben höchst spezifische Zuordnung, da hierbei die quantale Information der Einzelmolekül-Intensitäten zweier verschiedener Fluorophore als Kriterium erhalten bleiben, im Gegensatz zum Energietransfer. Neben der Erhöhung der Selektivität der Fluoreszenz durch Energietransfer kann die Spezifität des Signals durch Beleuchtung in Totalreflexion erhöht werden (siehe Fig. 3 unten). Hierdurch werden nur diejenigen Fluorophore angeregt, die sich im Bereich von etwa 100 nm von der Substratoberfläche befinden (exponentiell abklingende Lichtintensität). Die Detektionsempfindlichkeit erreicht ebenfalls die einzelner Fluorophore. Diese Art der Beleuchtung soll die Erfindung durch Ermöglichung der Anwendung des Hochdurchsatz-Screenings auf Einheiten (vorwiegend Zellen) mit starker Autofluoreszenz ergänzen.

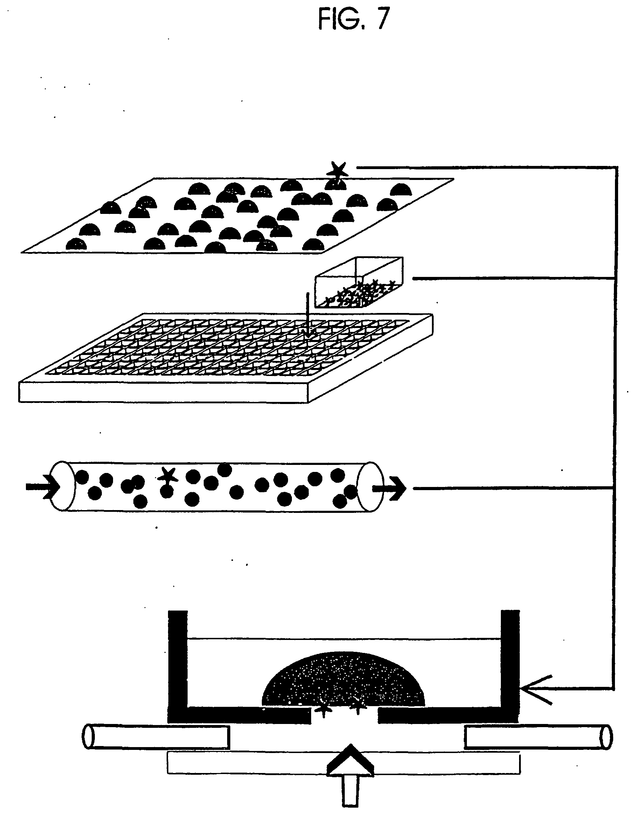

Erfindungsgemäß erlaubt die gleiche Apparatur unmittelbar nach Detektion von gesuchten Einheiten durch Screening eine detaillierte Analyse dieser Einheiten. Diese kann entweder direkt in der "Screening"-Probe stattfinden oder nach der Überführung einer Einheit in eine Analysezelle. Fig. 7 zeigt dies am Beispiel einer biologischen Zelle.

Die Analysezelle erlaubt Einzelmolekül-Mikroskopie in einem Bereich der biologischen Zelle, der einer austauschbaren Pufferlösung und Wirkstoff frei zugänglich ist. Desweiteren wird die Zelle am Substrat praktisch elektrisch dicht gebunden, so dass die hochempfindliche Fluoreszenzmikroskopie mit Elektrophysiologie verbunden werden kann, z.B. zur Beobachtung einzelner Ionenkanäle, elektrisch und optisch.

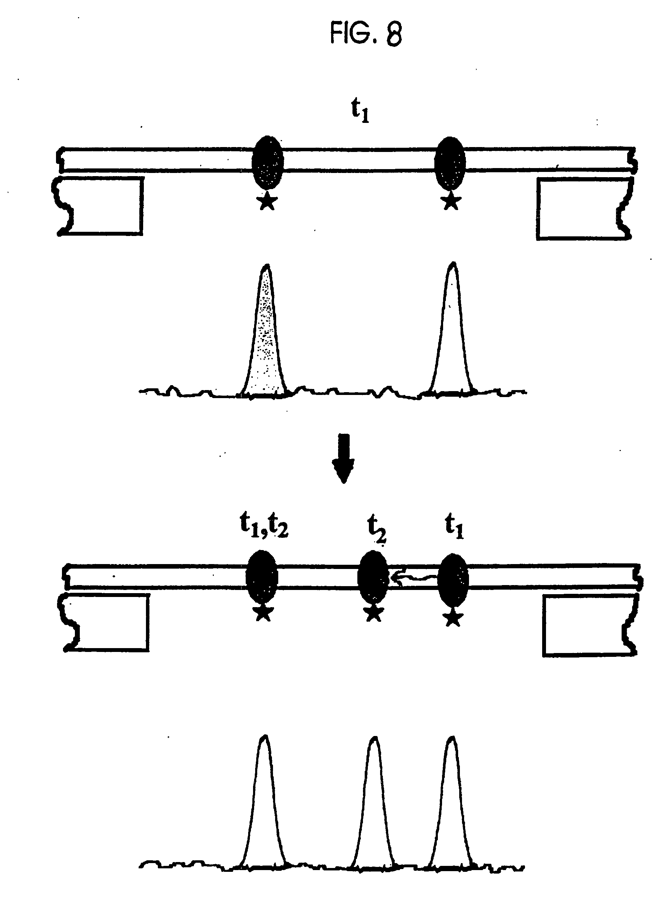

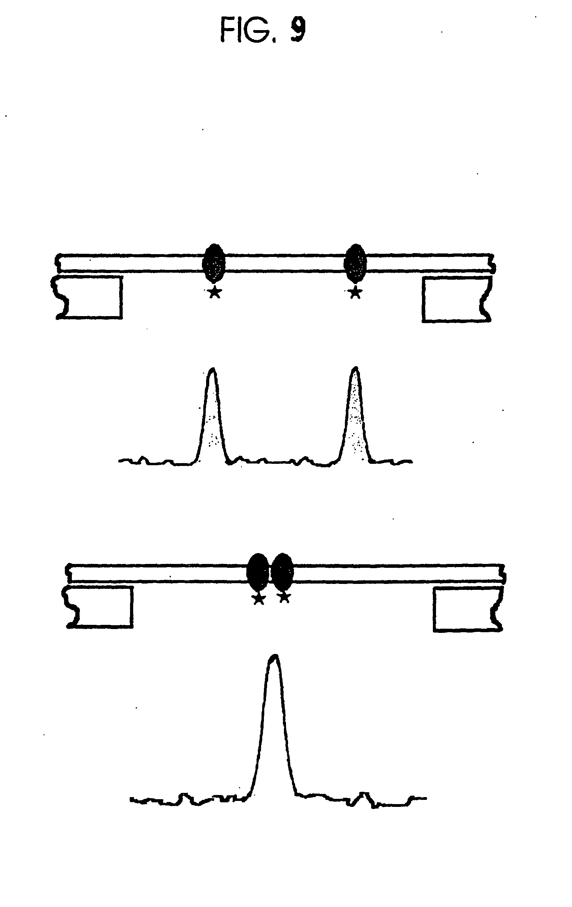

Die Figuren 8 - 13 skizzieren fünf grundlegende Informationen, die durch Einzelmolekül-Mikroskopie an transferierten Einheiten möglich werden. Hierbei wird "binning" angewendet, um die zeitliche und laterale Auflösung an die gewünschte Information anzupassen. Die Probe wird nicht bewegt und kurze (ms), periodisch wiederholte Beleuchtung wird verwendet. Dies gestattet für jede Beleuchtung die Positionen genügend weit entfernter einzelner Fluorophore zu detektieren und zeitlich zu verfolgen (Fig. 8). Damit wird entscheidbar, ob ein markierter Rezeptor mobil, begrenzt mobil oder immobil ist, frei diffundiert oder limitierte Diffusion zeigt oder selbst-assoziiert, ko-assoziiert mit anderen Komponenten oder transient geclustert ist. Auch die Verteilung über die (Zell-)Oberfläche kann sichtbar gemacht werden. Das hohe Signal und der große Rauschabstand S/N (etwa 150 Counts und S/N = 30 für 5 ms Beleuchtung) gestattet Zuordnungen beobachteter Signale zur Zahl ko-lokalisierter Fluorophore. Damit eröffnen sich zahlreiche mechanistische Studien, die Assoziation, Ko-Lokalisation und Stöchiometrie assoziierter Komponenten betreffen, in Fig. 9 für Dimerisierung einer Membrankomponente skizziert.

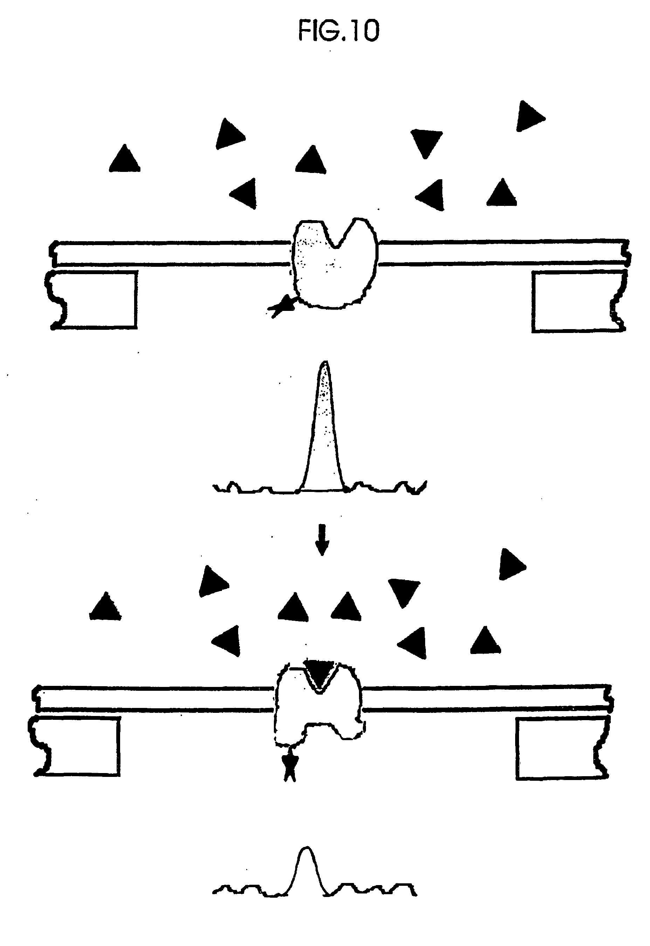

Spezielle Liganden (deren Fluorophor nach Bindung an den Rezeptor in eine fixe Richtung zeigt) können zur einmolekularen Detektion von Konformationsänderungen eingesetzt werden. Eine leichte Drehung des Fluorophors bei Strukturänderung des Rezeptors genügt zur Detektion der Konformationsänderung über die Intensitätsänderung seines Fluoreszenzsignals, so wie in Fig. 10 skizziert. Hierzu kommt sowohl linear polarisiertes Licht verschiedener Richtungen der Polarisation als auch zirkular polarisiertes Licht zur Anwendung.

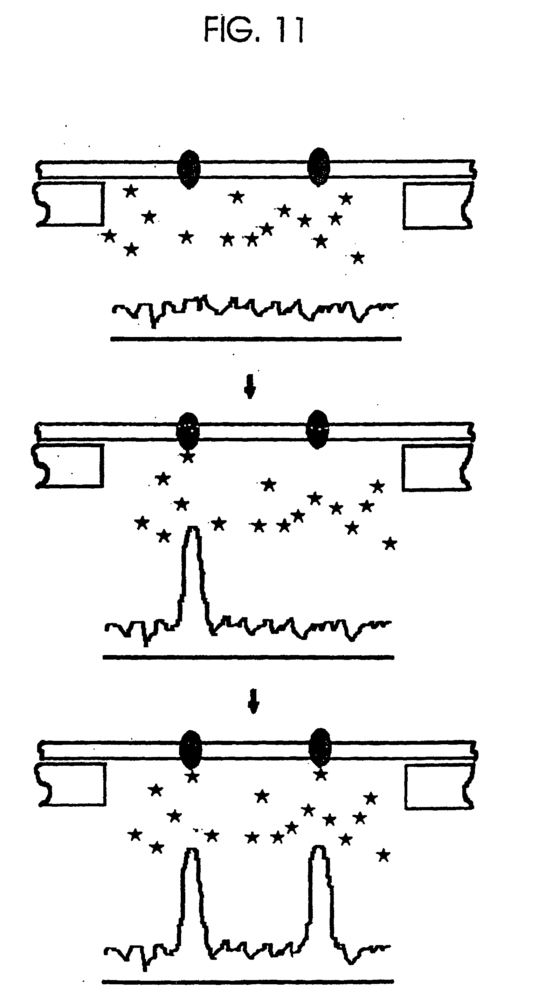

Für Ligandenkonzentrationen von höchstens einigen nM wird Ligandenbindung einmolekular analysierbar (Fig. 11), einschließlich Stöchiometrie der Ligandenbindung, sowie allosterischer und kooperativer Effekte bei Ligandenbindung. Durch den Einsatz zweier verschiedener Fluoreszenz-markierter Liganden lassen sich höchst spezifische Aussagen treffen und mit hoher Zuverlässigkeit, dass die beobachteten Liganden am Rezeptor gebunden sind. Hierzu kann entweder Energietransfer zwischen beiden Fluorophoren benutzt werden (Fig. 12), oder deren Ko-Lokalisation in aufeinanderfolgenden Bildern für jeden der beiden Farbstoffe (Fig. 13).

Die erfindungsgemäße kontinuierliche Aufnahme der Fluorophore in der Probe durch synchrone Bewegung der Probe und CCD-Frameshift (gemäß Figs. 3 bis 6) wird im Stand der Technik zum Einzelfluorophor Imaging weder beschrieben noch angedeutet, da dort eben nur statische Aufnahmen in unbewegten Proben gemacht wurden. Durch das erfindungsgemäße System wird aber zusätzlich zur ultimativen optischen Auflösung und Empfindlichkeit der zeitaufgelösten Detektion von Einzelmolekülen (z.B. Rezeptoren auf Zellen) eine beachtliche Screening-Geschwindigkeit ermöglicht, die zumindest 1000-mal schneller ist als bei Alternativverfahren der konfokalen Mikroskopie, bei gleichzeitiger Verfolgung eines Ensembles von Molekülen, das durch konfokale Mikroskopie nicht möglich ist.

### Beispiel 2 : Detektion von fluoreszenzmarkierten Lipidmolekülen in der Plasmamembran nativer glatter Muskelzellen

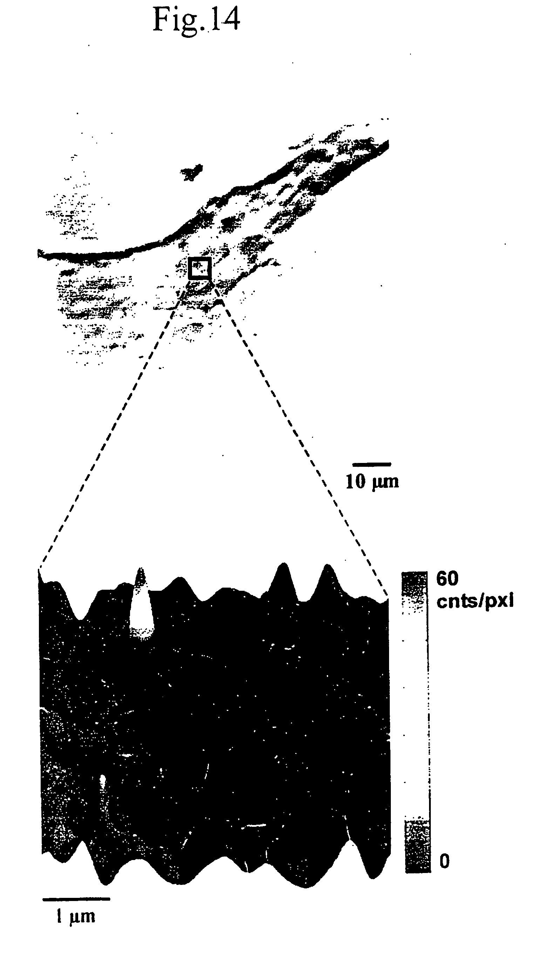

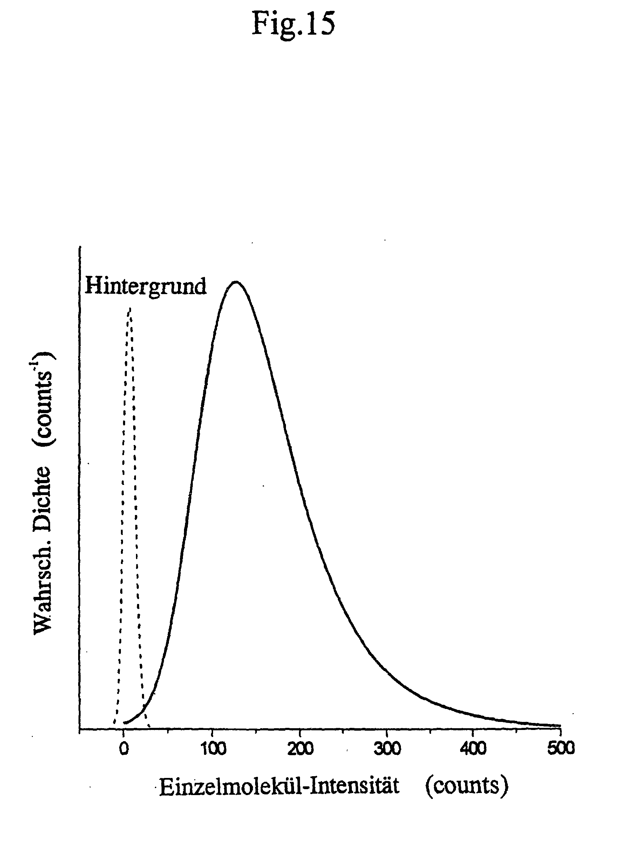

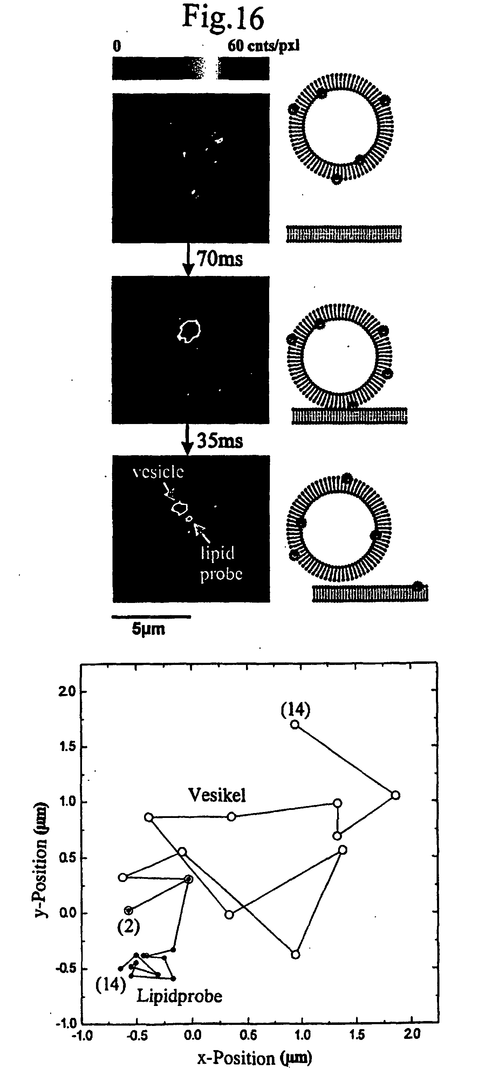

Methodik: Glatte Muskelzellen, HASM: "human aorta smooth muscle, stable cell line of wild tpye", werden auf Deckglas wachsen gelassen und im PBS-Puffer mikroskopiert. Der Einbau von DMPE-Cy5 (Dimiristoyl-Phosphatidyl-ethanolamin mit Cy5 (von AMERSHAM) als Farbstoffmolekül gebunden) erfolgt über Lipid-Vesikel (POPC: Palmitoyl-Oleoyl-Phosphatidylcholine, von AVANTI). Jedes 1000ste Lipid in den Vesikeln war ein DMPE-Cy5 (im Mittel 5 DMPE-Cy5 pro Vesikel). Die Zugabe dieser Vesikel über die Durchflusszelle zu den HASM-Zellen im Mikroskop (50 µg/ml Vesikel, Inkubation für 10 min, dann herausgewaschen mit PBS-Puffer) führt zu einzeln in die Plasmamembran eingebauten DMPE-Cy5, über Vesikel-Zellmembran-Lipidaustausch. Dieser Prozess der Abgabe eines DMPE-Cy5 an die Plasmamembran ist in Fig. 16 direkt zu sehen, wobei das Vesikel (mit -10 DMPE-Cy5, siehe hohes Signal) entlang der Zellmembran schnell diffundiert und plötzlich ein DMPE-Cy5 von dem Vesikel in die Plasmamembran überwechselt. Die Bewegungen der Lipidprobe und des Vesikels waren separat verfolgbar (siehe Trajektorien in Fig. 16 unten). Solch ein Austausch war bisher nicht beobachtbar auf Einzelmolekül-Ebene. Das Wesentliche ist jedoch, dass die Intensität von einem Fluorophor auch in der Zelle mit Eigenfluoreszenz noch klar aufgelöst ist (Fig. 14). Im vorliegenden Beispiel (Fig. 14-18) wurde die Intensität des Laserlichtes (630 nm) soweit reduziert, dass der effektive Fluoreszenzbackground der Zelle kleiner als das Ausleserauschen wurde. Die Intensität kann jedoch jederzeit erhöht werden, so dass man sich durch die Eigenfluoreszenz der Zelle über die Stelle orientieren kann, an der man gerade mißt. Die Intensitätsverteilung von 300 Einzelmolekülen (Fig. 15) ergab ein Signal/Rausch-Verhältniss von 25 für die Detektion einzelner Moleküle in der nativen Zellmembran, bei 5 ms Beleuchtung. Zum besseren Verständnis der gezeigten Peaks: Die gezeigte Fläche enthält 576 Pixel, das entspricht einer Objektfläche von ∼6 x 6 µm (jedes Pixel ist 27 x 27 µm, ein x 100 Objektiv wurde verwendet. Die HASM-Zelle ist etwa 100 µm lang, 15 - 20 µm breit und 5 - 10 µm hoch. Die Abbildung ist "diffraction-limited", d.h. jede Punktquelle wird als Gaußfleck abgebildet mit dem Radius von ∼ 270 nm, das entspricht 1 Pixel (60 % des Peaks auf 4 Pixeln). Im Peak waren 152 cnts.

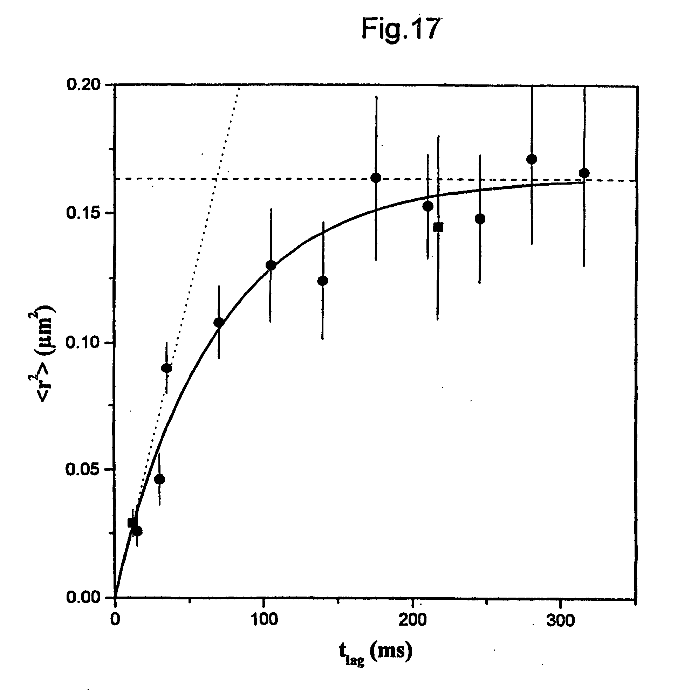

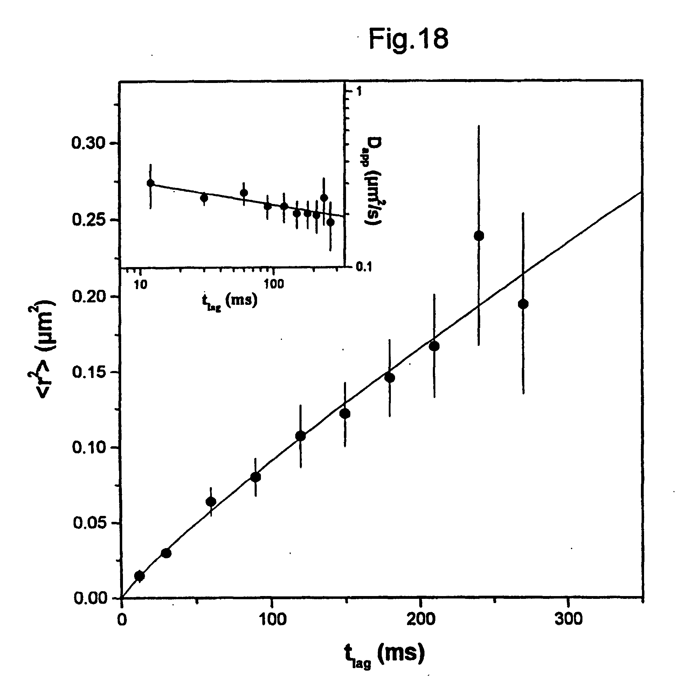

Routinemäßig wurden Sequenzen von bis zu 14 Bildern aufgenommen (siehe Fig. 16), jeweils 5 ms Beleuchtung mit Dunkelpausen zwischen 10 bis 30 ms (also Messzeiten von bis zu ∼0,5 sec). Diese ergeben Trajektorien für die Bewegung der markierten Lipide in der Plasmamembran. Ausgewertet wurden ∼300 solcher Trajektorien (schließt Messungen an drei verschiedenen Zellen und an verschiedenen Stellen der Zellen, aber immer an der Oberseite der Zellen, die unten am Deckglas adhäriert sind, ein. In der Messzeit von 0,5 sec wurde keine Konvektion oder sonstige Zellbewegung gesehen (bis auf wenige erratische Zellzuckungen). Das Ergebnis war beeindruckend: Die Auswertung der Trajektorien ist in Fig. 17 dargestellt: Das Quadrat des Abstands (MSD = "mean square displacement") zwischen beobachteten Molekülpositionen und Trajektorien ist aufgetragen gegen das entsprechende Zeitintervall Δt. Bei Brown'schen Diffusionsprozessen sollte das einen linearen Zusammenhang ergeben; MSD = 4Dₗₐₜ . Δt, wobei sich aus der Steigung 4Dₗₐₜ die Diffusionskonstante Dₗₐₜ für laterale Bewegung ergibt. Zunächst, für kleine Diffusionslängen, zeigt sich eine Diffusion mit Dₗₐₜ = 0,6 µm²/sec, ein typischer Wert für Lipiddiffusion in Zellmembranen (aus Ensemblemessungen über FRAP : fluorescence recovery after photobleaching). Für längere Diffusionszeiten bleibt der Bewegungsbereich der Lipidprobe beschränkt. Die gestrichelte Linie ergibt, dass die Probe in ihrer Bewegung auf eine Fläche mit dem Radius von 300 nm beschränkt bleibt. Dies ist der erste direkte Nachweis der Existenz von Lipiddomänen, die bislang nur postuliert wurden ("lipid rafts", Simons und Ikonen, Nature 387: 569-572). Für "lipid rafts" wurde die präfertielle Partition von Lipiden mit gesättigten Acylketten postuliert (so wie in der Lipidprobe DMPE-Cy5). Tatsächlich zeigte die homologe Probe DOPE-Cy5, die in jeder Acylkette nur eine Doppelbindung besitzt, keine Partition in Domänen (durch Ko-Lokalisation bestätigt, nicht gezeigt), sondern freie, unbeschränkte Diffusion in der Plasmamembran (Fig. 18).

Weitere Untersuchung der Domänen zeigte, dass sie am Zytoskelett verankert sind und sich aktiv (uni-direktional) bewegen.

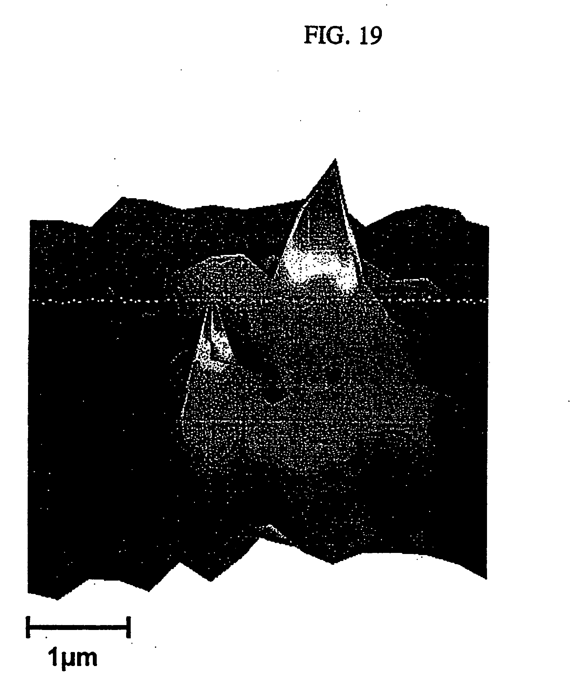

Diese Ergebnisse zeigen prinzipiell, dass jede Anwendung von SDT auf Zellen, auch wie bisher auf Modellsysteme, neue Zugänge eröffnet, einfach auf Grund der Tatsache, dass man Prozesse einmolekular und dynamisch sehen kann, die bislang nur über Ensemble-gemittelte Daten zugänglich waren. Dabei ist der vorliegende Nachweis wesentlich, dass sich auch an lebenden Zellen (zumindest an diesen glatten Muskelzellen) einzelne Fluorophore klar und zeitaufgelöst mikroskopieren lassen. Der Marker, Cy-5, kann auch an einem Liganden hängen mit gleichen Fluoreszenzeigenschaften. Der Frame-Proben-Shift reduziert diese Auflösung nur unwesentlich, er dient dem kontinuierlichen "screening" von ganzen Zellkulturen oder Zellen in Nanotiter-Platten, etc. Die Auflösung kann weiter verbessert werden durch 2-Photonen-Anregungs-Fluoreszenz-Mikroskopie. Fig. 19 zeigt die erste Realisation einer 2-Photonen-Abbildung von zwei Phospholipiden (PE-) mit gebundenem TMR (Tetramethyl-Rhodamin) als Fluoreszenz-Marker in einer Phospholipid (POPC)-Membran.

**Beispiel 3 : Simulation einer Echtzeitaufnahme der Verteilung von Einzelfluorophoren auf ganzen Zellen, der räumlichzeitlichen Auflösung, der Positionsgenauigkeit und der Detektionssicherheit der Fluorophore**

In Beispiel 2 war die Beobachtung der Einzellipid-Diffusion in der Plasmamembran der Zelle unter anderem dadurch möglich, dass die Ebene der Lipidbewegung (Membranfläche) genügend weit mit der Fokusebene (Schicht mit effektiver Dicke von 1,6 µm) zur Deckung gebracht werden konnte, was durch Fokussierung auf den oberen Rand der Zelle realisiert wurde.

Zur Erfassung von Bewegungen in jede Richtung, auch quer zur Fokusfläche überall an oder in der Zelle, sowie nahezu Zeit-gleich für alle Fluoreszenz-markierten Moleküle, wird die erfindungsgemäße Probenbewegung und Frameshift in folgender Variante durchgeführt.

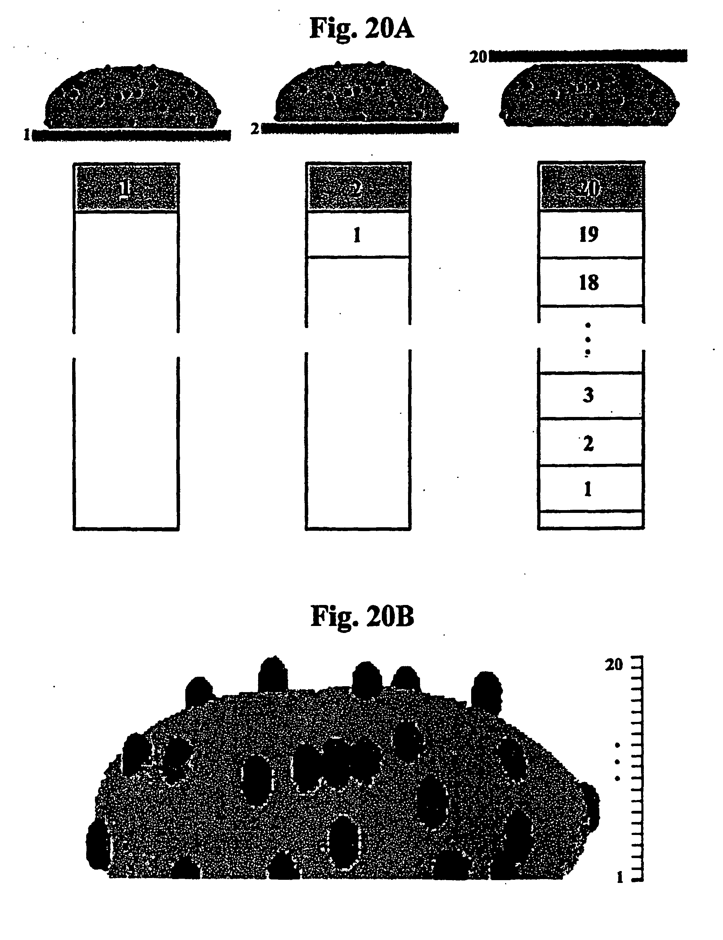

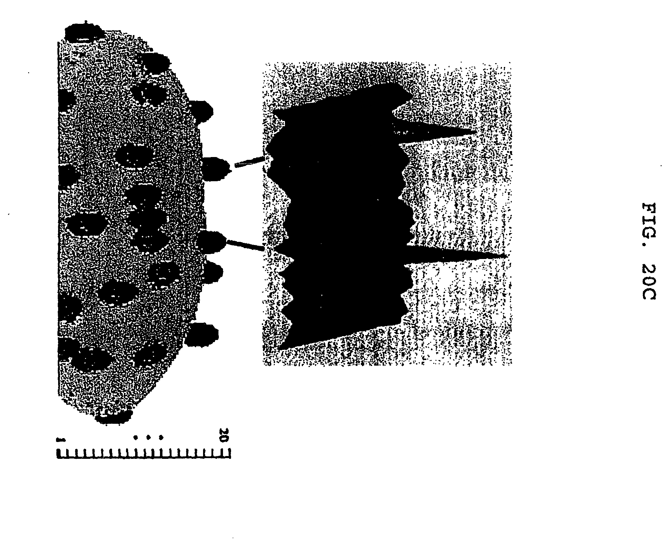

Methodik: Die Methodik und die Vorrichtung zur Bildaufnahme ist wie in Beispiel 2 mit zwei wesentlichen Unterschieden:
1.) Die Fokusebene wird für sequentielle Bildaufnahme schrittweise von Position zu Position in z-Richtung durch die Zelle bewegt. Dies ist in Fig. 20A skizziert, mit der Fokusschicht in rot (effektive Dicke, aus der Fluoreszenzphotonen gesammelt werden, ist 1,6 µm), einer Zelle in grün (etwa 8 µm hoch), mit einem Ensemble von zufällig verteilten gleichen Fluorophoren (schwarze Punkte) .
2.) Eine CCD-Kamera mit folgenden Spezifikationen kommt zum Einsatz: mit großem, länglichem Pixelarray und besonders schnellem Frameshift (z.B. eine CCD-Kamera mit 2048*256 Pixeln der Größe 20 x 20 µm, 7 µs Shiftzeit pro Linie, und 2 µs/Pixel Auslesezeit, Konversion von 0,8 Elektronen/Photon, so wie sie von z.B. PHOTOMETRICS für Spektroskopie angeboten wird).

Im Ausführungsbeispiel (Fig. 20) werden 20 Bilder aufgenommen während des Passierens der Fokusschicht durch die ganze Zelle. Jedes Bild wird mit gleicher Beleuchtungszeit "t(ill)" auf der gleichen Teilfläche des Pixelarrays aufgenommen (graue Fläche in Fig. 20A mit 100*256 Pixeln), und dann durch Frameshift verschoben, wie in Fig. 20A für das erste, zweite und letzte Bild dargestellt. Während der für den Frameshift benötigten Zeit "t(fs)", 0,7 ms bei der oben spezifizierten Kamera, wird die Aufnahme unterbrochen (durch Unterbrechung der Beleuchtung oder Abdeckung der Kamera).

Die Verschiebung der Fokusebene pro Bildaufnahme ist im Ausführungsbeispiel gleich 0,4 µm gewählt, damit die 20 Aufnahmen die ganze Zelle von 8 µm Höhe gerade erfassen (siehe Fig. 20A).

Die Zeit "t(ill)" ist in Grenzen frei wählbar. Einerseits sollte "t(ill)" wesentlich größer sein als "t(fs)", um den Informationsverlust auf Grund der Beleuchtungspausen gering zu halten. Andererseits sollte die gesamte Aufnahmezeit t(ges)=(t(ill)+t(fs))*20 nicht zu groß sein (lange "t(ill)"-Zeiten sind vorteilhaft zur Ausmittelung unspezifischer Fluoreszenz), damit das Molekülensemble der ganzen Zelle in nahezu Echtzeit abgebildet werden kann. Abbildung in Echtzeit ("real time imaging") erfordert, dass t(ges)<t(bew) ist, wobei "t(bew)" die Zeit ist, die die abgebildeten Moleküle benötigen, um sich über eine Länge zu bewegen, die der optischen Auflösung entspricht (etwa 0,5 µm in x- und y-Richtung und etwa 1,6 µm in z-Richtung). Für die Diffusion von typischen Membranproteinen oder von aktiv transportierten Komponenten liegt "t(bew)" zumeist unter etwa 0,6 s. Für das Ausführungsbeispiel ergibt sich daraus ein Bereich von 5 ms < t(ill) < 30 ms für "real time imaging" der Fluorophore einer Zelle. Die gesamte Aufnahme dauert dann 0,1 s < t(ges) < 0,6 s.

Fig. 20B illustriert das berechnete Ergebnis von "real time imaging" von Fluorophoren an einer Zellmembran für t(ill)=5 ms, wobei die in Beispiel 2 gemessenen Daten und Bedingungen für eine Einzelaufnahme zugrundegelegt wurden (3 counts/Pixel an Eigenfluoreszenz der Zelle, 152 count/Fluorophor für 5 ms Beleuchtung mit über die Fokustiefe gemittelter Intensität, laterale Auflösung von 0,5 µm, und Fokustiefe von 1,6 µm). Diese Daten legten alle Parameter für die Berechnung des 3D-Bildes für die oben beschriebene Methode fest, wobei als Zellform ein Rotationsellipsoid mit willkürlichen Abweichungen gewählt wurde (Fig. 20A zeigt die die Vorderansicht der Zelle), und mit zufällig verteilten Fluorophoren an der Zellmembran (schwarze Punkte, insgesamt 45). Fig. 20B und C zeigen die Vorderansicht des 3D-Fluoreszenzbildes der Zelle und der Fluorophore, erzeugt durch volle Simulation der Abbildungsmethode (in der Simulation sendet jedes Fluorophor entsprechend der momentanen Beleuchtung Fluoreszenzphotonen aus, die unter Berücksichtigung der Diffraktions-limitierten Abbildungsfunktion des Mikroskops in zufälliger Verteilung auf entsprechende Pixel abgebildet werden, nach entsprechender Konversion zu Elektronen als "counts"). Der gewählte Farbcode zeigt grün für niedrige Zahl von "counts" (Eigenfluoreszenz der Zelle und "readout noise"), und gelb, hellrot bis dunkelrot für steigende Zahl von "counts". Der Farbcode ist so gewählt, dass der hellrote Bereich das Auflösungsvolumen in etwa reproduziert (durch die Sammelstatistik leicht verwaschenes Ellipsoid mit Durchmessern von in etwa 0,5 µm in der x-y-Ebene und 1,6 µm in z-Richtung), und dass der dunkelrote Kern die Genauigkeit der Positionierung einzelner Farbstoffe wiedergibt (in etwa 50 nm in der x-y-Ebene und 150 nm in z-Richtung). Der Datenverlust durch Dunkelzeiten während des Frameshifts konnte durch Interpolation zwischen den Intensitäten aufeinanderfolgender Bilder approximativ berücksichtigt werden, dadurch, dass im Mittel jeder Fluorophor in 4 Bildern vorkommt (Fokusschichtdicke = 1,6 µm = 4*dz, mit dz = Bild-zu-Bildverschiebung = 0,4 µm).

Die Simulation zeigt, dass 3D-Zellaufnahmen in "real time" und mit klarer Detektion der Fluoreszenz-markierten Moleküle mit der erfindungsgemäßen Methode möglich ist. Im Prinzip kann diese 3D-Aufnahme der Zelle mehrfach wiederholt werden nach jeweils einer Mindestzeit "t(lese)", die notwendig ist zum Auslesen des Pixelarrays (etwa 1 s bei der oben genannten Kamera). Die Zahl der Wiederholungen ist durch Ausbleichen der Fluorophore limitiert. Für die angenommenen Bedingungen von Beispiel 2 ist zumindest eine 3-fache Wiederholung möglich ohne große Verluste durch Ausbleichen. Im Prinzip kann die Methode nicht nur Fluorophore an Zellen abbilden, wie im Ausführungsbeispiel gezeigt, sondern auch Fluorophore in Zellen. Hierbei kann der Einsatz von 2-Photonenanregung vorteilhaft sein, zumindest für Studien in Zellen mit hoher oder nicht minimierter Autofluoreszenz.

Solche Echtzeit-3D-Aufnahmen von Molekülensembles einer Zelle gehen nicht nur weit über den Stand der Technik hinaus, sondern eröffnen qualitativ neue Zugänge zur Aufschlüsselung Zell-physiologischer Prozesse, etwa die Aufdeckung und Analyse von Komponenten-Organisation/Umorganisation als eine wesentliche Basis für die räumlich-zeitliche Regelung und Koordinierung zellulärer Vorgänge, oder die mechanistische Analyse von morphologischen Antworten der Zelle auf einen äußeren Reiz durch etwa einen Botenstoff oder durch einen pharmakologischen Wirkstoff, oder durch einen nach Beispiel 1 erfindungsgemäß identifizierten möglichen Wirkstoff.

### Beispiel 4 : Vorrichtung für die 3D-Bildaufnahme ganzer Zellen

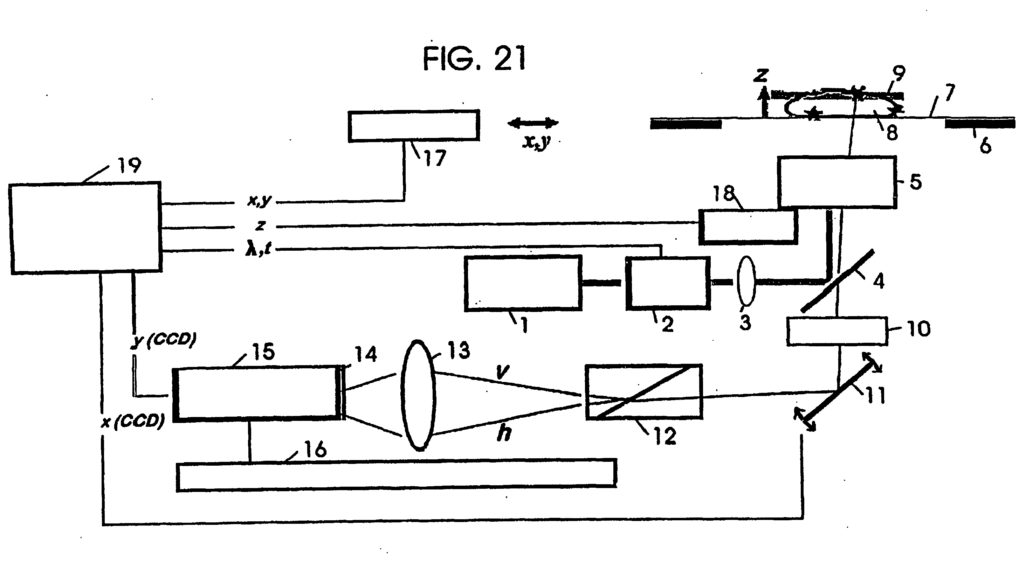

Fig. 21 ist eine Darstellung des erfindungsgemäßen SDT-Mikroskops, mit dem besonders ein 3D-Scan ganzer biologischer Zellen effizient durchgeführt werden kann.

Die Lichtquelle (1) besteht hier aus einem oder mehreren Lasern (Argonlaser, Dyelaser, 2-Photonen-Anregungs-Laser). Der AOM (2) (akusto-optischer Modulator) lässt das Laserlicht für einstellbare Zeiten (gesteuert vom Controller (19)) und bestimmter Farbe durch, etwa nur das Licht des Argonlasers für bestimmte Belichtungszeit, wiederholt nach einstellbaren Dunkelpausen, oder abwechselnd Laserlicht verschiedener Wellenlänge (Argonlaserlinie, z.B. 514 nm, und 635 nm vom Dye laser, der durch den Argonlaser gepumpt wird), zur Anregung von zwei verschiedenen Farbstoffmolekülen in der Probe.

Die Linse (3) weitet die Fokusebene (9) auf; sie ist austauschbar zur Ausleuchtung von 20 µm- bis 600 µm-Bereichen. Für große Belichtungsflächen (im SDT-x,y-Scan-Modus) wird zwischen AOM (2) und Linse (3) das Licht durch ein "single mode"-Faseroptikbündel geleitet, womit man homogene Ausleuchtung von runden oder rechteckigen Bereichen (SDT-x,y-Scan) erreicht (nicht in der Figur inkludiert). Die Fokusebene (9) wird auf einen bestimmten z-Wert (Abstand zwischen Fokusebene und Objektträgeroberfläche (7)) durch einen z-Piezo (18) eingestellt, der das Objektiv (5) in z-Richtung verschiebt.

Die Probe ist horizontal verschiebbar (in x,y-Ebene) durch Präzisionsmotoren (17), die den Probentisch (6) verschieben und durch den Controller (19) angesteuert werden. Hierbei kann der z-Piezo (18) zur Nachregelung eines konstanten z-Wertes benutzt werden (über kapazitive Abstandsmessung, nicht in der Figur inkludiert).

Die Fluoreszenz einzelner Farbstoffmoleküle kann auf dem Pixelarray (14) der CCD-Kamera (15) als lokalisiertes, klar auflösbares Signal detektiert werden. Zunächst wird die Fluoreszenz eines Moleküls durch das Objektiv in Parallelstrahlen (Stand der Technik der Objektive mittlerweile aller Fluoreszenz-Mikroskope) bestimmten Winkels gebrochen. Das Strahlenbündel passiert den dichroitischen Spiegel (4), der nur das Anregungslicht reflektiert, sowie Filter (10), die nur für das Fluoreszenzlicht transparent sind.

Das nächste Element im Strahlengang ist ein Galvanometer-Spiegel (11). Der Spiegel kann durch den Controller (19) auf jeden Winkel (notwendiger Bereich etwa +/- 5 Grad, entspricht der Breite der unten als Beispiel angegebenen CCD-Kamera) eingestellt werden, mit einer Genauigkeit von wenigen µrad und einer Einstellzeit von etwa 0,3 ms (erhältlich bei Cambridge Technology, Inc., MA, USA, Modell 6800).

Das so abgelenkte Strahlenbündel durchquert ein Wollastonprisma (12), das das Fluoreszenzlicht in zwei Strahlen orthogonaler Polarisation zerlegt (h: horizontal, und v: vertikal polarisiert). Der Winkel zwischen den beiden Strahlen ist durch die Prismenform einstellbar, und wird hier so gewählt, dass, nach Passieren der Abbildungslinse (13), die beiden Polarisationsanteile des Fluoreszenzlichts gleichzeitig aber räumlich getrennt auf dem Pixelarray abgebildet werden, und zwar in einem Abstand von der halben x-Breite des Arrays. Solche Prismen werden von einigen Firmen angeboten, etwa von Bernhard Halle Nachf. GmbH & Co., Berlin.

Die Kombination von Galvanometer-Spiegel (11) und Wollastonprisma (12) gestattet, die Speicherfläche des Pixelarray optimal zu nutzen, in Synchronisation mit dem Frametransfer der CCD-Kamera zur Datenverschiebung in y-Richtung des Arrays. Die Nutzung dieser Speicher- und Datenshift-Möglichkeiten ist abhängig von der Anwendung. Anwendungen lassen sich in drei Bereiche gliedern: entweder wird die Fokusebene horizontal (in der x,y-Ebene) durch die Probe geführt (SDT-x,y-Scan) oder vertikal (3D-SDT), oder sowohl horizontal (langsam) als auch vertikal (schnell und zyklisch). Diese drei Nutzungsarten des gleichen Geräts unterscheiden sich nur durch das Controller-Programm, d.h. die Ansteuerung der Probenbewegung (in x,y-Richtung oder (und) in z-Richtung), in Synchronisation mit dem Beleuchtungsmodus (Wellenlängen, Licht/Dunkel-Intervalle, etc.) und koordiniert mit geeigneten Modi der Daten-Speicherung und -Verschiebung auf dem CCD-Pixelarray (kombinierter Einsatz von Drehspiegel, Wollastonprisma, Frametransferoptionen und Auslesen der CCD-Kamera).

Schließlich werden die mit der CCD-Kamera gesammelten Daten prozessiert, analysiert und in geeigneten Formen zur Darstellung in einer Bildgenerierungseinheit (16) gebracht.

Die CCD-Kamera, die für die Abschätzungen in Fig. 6 und Fig. 22, 23 plus Beschreibung (siehe unten) eingesetzt wurde, ist erhältlich bei Princeton Instruments, USA, Modell MicroMAX-1300PB.

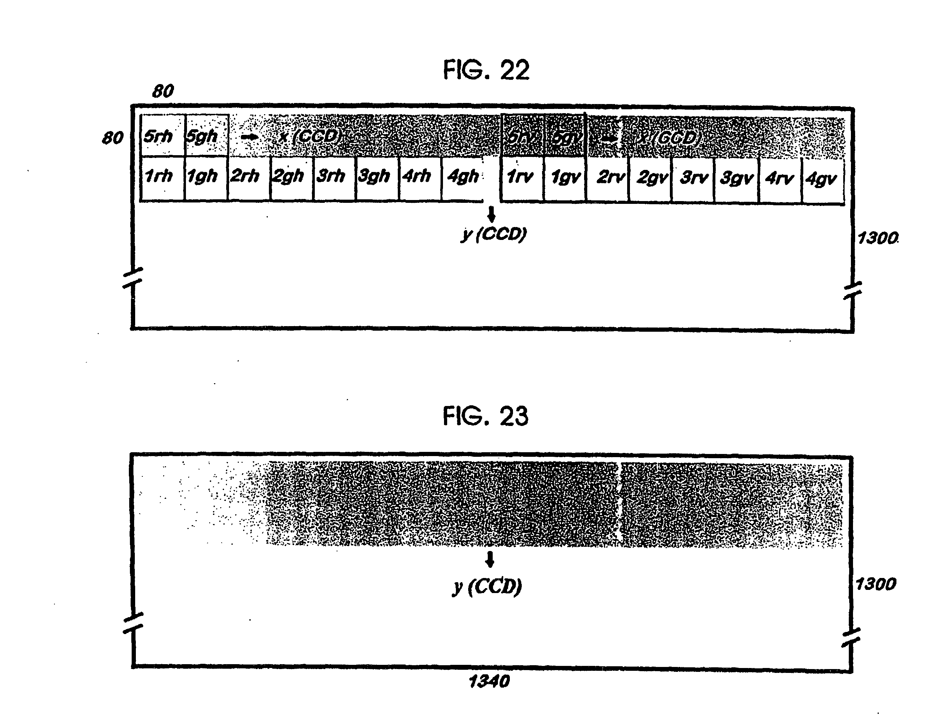

Im Arbeitsmodus für großflächiges Screening (SDT-x,y-Scan) wird die Probe kontinuierlich in x-Richtung durch Präzisionsmotoren (17) bewegt (s. Fig. 21 und 23). Die Beleuchtung ist großflächig (etwa 100*250µm) und kontinuierlich, so dass jedes Molekül gleich lange beleuchtet wird. Bei diesem Modus bleibt der Drehspiegel in fixer Winkelposition. Das Wollastonprisma kann benutzt oder ausgeschwenkt werden. Die Bilddaten auf der CCD-Kamera (siehe grauen Bereich in Fig. 23) werden kontinuierlich Linie um Linie in y-Richtung verschoben und ausgelesen.

Im Arbeitsmodus für 3D-Imaging (Real-Time 3D-SDT) (vgl. Fig. 14-18) sind einzelne Fluoreszenzmarker an lebenden Zellen abbildbar und in ihrer Bewegung verfolgbar.

In Fig. 20 ist das Prinzip der 3D-Bildaufnahme erläutert, wohingegen Fig. 21 mit Fig. 22 die apparative und Signal-logistische Seite der Realisation der 3D-Bildaufnahme zeigt, allerdings auch nur für ein Beispiel (zwei Farben mit je zwei Polarisationen für jede Fokusebene). Andere Applikationen, etwa Anregung von drei oder noch mehr Farbstoffen, mit oder ohne Polarisationsaufspaltung, lassen sich durch Modifizierung des Ansteuerungsprogramms analog zu dem Beschriebenen realisieren. Realzeit-Imaging von Zellen ist, nach dem unten angegebenen Kriterium, für bis zu vier Farben und Erfassung beider Polarisationsanteile ohne weiteres möglich.

Als CCD-Kamera wird im vorliegenden Beispiel eine MicroMAX-1300 PB mit 1300*1340 Pixel verwendet. Die Pixelfläche ist 20µm*20µm. Der Frameshift ist in y-Richtung und benötigt 3µs pro Linie. Auftreffende Photonen werden mit einer Konversion von 0,9 im gesamten optischen Bereich in Elektronen umgewandelt. Die Kamera ist für Aufnahmezeiten von Sekunden praktisch frei von spontan entstehenden Dunkelcounts. Lediglich beim Auslesen der Kamera mit 1µs (20µs) pro Pixel entsteht ein schwaches Hintergrundrauschen von 7 Elektronen pro Pixel. Wie für die HASM-Zelle gezeigt, lassen sich von einzelnen Fluorophoren in nur 5ms Beleuchtüngszeit etwa 150 Elektronen sammeln, was sich einige Male wiederholen lässt (3-20 Mal bei momentan üblichen Dyemolekülen). Bei Beleuchtung einer 16µm durchmessenden Fläche ist die Bildgröße etwa 80*80 Pixel für ein 100er-Objektiv. Fig. 22 zeigt die Aufnahme von 4 Bildern für jede z-Position der Fokusebene. Die Zahl in den Einzelbildern gibt die Fokusebene an, von z=0 um jeweils 0,5µm ansteigend.

Der zweite Index, r oder g, steht für rote oder grüne Fluoreszenz. Auf der ersten Fokusebene wird zunächst rote Fluoreszenz angeregt, die dann in beide Polarisationsanteile (h und v) zerlegt wird, und in der linken bzw. rechten Hälfte des Arrays in separaten Einzelbildern während der Beleuchtungszeit gesammelt wird (siehe 1rh und 1rv). Danach wird grüne Fluoreszenz angeregt und in den Bildflächen 1gh und 1gv gesammelt. Hierzu wird der Drehspiegel in der Dunkelpause von jeweils 0,5 ms in die nächste Stellung gedreht (um etwa 0,5 Grad), so dass sowohl das "1gh"als aus "1gv"-Bild um 80 Pixel nach x verschoben auf den Bildbereich (grau) fällt, direkt neben die beiden "roten" Bilder der Ebene 1. In der folgenden 0,5ms-Dunkelpause wird die Fokusebene 2 eingestellt (durch Ansteuerung des z-Piezos am Objektiv) und der Drehspiegel auf seine neue Position gedreht, zur folgenden Aufnahme von zuerst 2rh und 2rv und, nach Spiegeldrehung von 2gh und 2gv auf dieser Fokusebene 2. Dies wird fortgesetzt, bis die Bildreihe (grauer Bereich) vollgeschrieben ist, im vorliegenden Beispiel nach den vier Bildaufnahmen auf Ebene 4. In der darauffolgenden Pause von 0,5ms werden die 16 Bilder durch Frameshift der CCD-Kamera in y-Richtung und 80 Pixelzeilen verschoben, wofür etwa 0,24ms benötigt werden, und der Drehspiegel wird an seine Anfangsposition zurückbewegt. Die grau markierte Bildzeile wird sodann mit weiteren 16 Bildern belegt, von den Fokusebenen 5 bis 8, usw. Die 3D-Aufnahme ist nach Erreichen eines vorgegebenen z-Wertes (Überschreiten der Höhe der abgebildeten Zelle, etwa nach 10µm, entsprechend 20 Aufnahmeebenen) beendet.

Bei einer Beleuchtungszeit von 1,5ms für jedes h- und v-Bildpaar wird jedes Farbstoffmolekül wegen der Überlappung der 1,6µm tiefen Fokusebenen für effektiv etwa 5ms beleuchtet und seine Teilbilder in benachbarten Ebenen enthalten etwa 150 Elektronen im Bildpaar.

Die Gesamtaufnahme (20 Ebenen) benötigt dann nur 80ms. In dieser Zeit haben sich Membranmoleküle (Diffusionskonstanten < 0,1 nm²/s) oder aktiv bewegte Moleküle (Geschwindigkeit < 2 µm/s) nicht aus dem optischen Auflösungsvolumen (Ellipsoid mit 0,25 µm Halbachsenlänge in x- und y-Richtung und 0,8 µm in z-Richtung) hinausbewegt. Auf Grund dieses Kriteriums gestattet die erfindungsgemäße Methode 3D-Aufnahmen einer ganzen Zelle in Echtzeit (Real-Time) durchzuführen und zwar mit Einzelmolekül-Empfindlichkeit zur molekularen Detektion über die ganze Zelle, ein bislang unerreichtes Ziel.

Die Auslesezeit dieser 3D-Information benötigt etwa 1 Sekunde. Somit kann jede Sekunde ein neues 3D-Bild aufgenommen werden, oder in größeren, gewünschten Zeitabständen. Damit werden Bewegungen und Prozesse der Einzelmoleküle oder Assoziate des gesamten abgebildeten Molekül-Ensembles verfolgbar (solange die Moleküle noch fluoreszieren; unter den angegebenen Beleuchtungsbedingungen lassen sich mit momentan gebräuchlichen Fluorophoren zumindest 3 3D-Bilder aufnehmen), jedoch können auch mit einer kleineren und langsameren Kamera für einen Farbstoff und keine Polarisationsaufspaltung gute Ergebnisse erzielt werden.

## Patentansprüche

1. Vorrichtung zur Visualisierung von Molekülen, von deren Bewegung und von Wechselwirkungen zwischen Molekülen und von molekularen Prozessen in einer Probe, insbesondere von Molekülen und Prozessen in biologischen Zellen, unter Verwendung der Single-Dye-Tracing-(SDT-) Methode, umfassend:
- mindestens eine Lichtquelle zur großflächigen Fluoreszenzanregung mit Licht, insbesondere Laserlicht, mindestens einer Wellenlänge über Ein- oder Mehrphotonenabsorption durch gleiche oder verschiedene Markermoleküle an Molekülen in der Probe,
- einen Objektträger zur Aufnahme der Probe,
- ein hochempfindliches Detektions- und Analysesystem, das eine Charge-Coupled-Device-(CCD-) Kamera umfasst, wobei die Probe bzw. der Objektträger und das Detektions- und Analysesystem beim Messprozess lateral und/oder vertikal relativ zueinander verschiebbar sind, und
- eine Steuereinheit zur Koordination und Synchronisation von Beleuchtungszeiten und gegebenenfalls Wellenlängen, der lateralen und/oder vertikalen Relativbewegung zwischen der Probe bzw. dem Objektträger mit der Probe und dem Detektions- und Analysesystem sowie vorzugsweise der Positionierung und Verschiebung der Abbilder zu jeder Probenposition auf dem Pixelarray der CCD-Kamera.

2. Vorrichtung nach Anspruch 1, **dadurch gekennzeichnet, dass** mindestens eine Lichtquelle ein Laser ist, insbesondere ein akustooptisch umschaltbares Laserlicht.

3. Vorrichtung nach Anspruch 1 oder 2, **dadurch gekennzeichnet, dass** die Lichtquelle ein Argonlaser, ein Dyelaser und/oder ein 2-Photonen-Fluoreszenz-Anregungs-Laser ist.

4. Vorrichtung nach einem der Ansprüche 1 bis 3, **dadurch gekennzeichnet, dass** die Steuereinheit einen Pulsgeber und eine Software zur Steuerung der Lichtquelle(n) und der Relativbewegung zwischen der Probe und dem Detektions- und Analysesystem umfasst.

5. Vorrichtung nach einem der Ansprüche 1 bis 4, dadurch ge kennzeichnet, dass die CCD-Kamera einen Frameshift-Modus und einen kontinuierlichen Auslese-Modus umfasst.

6. Vorrichtung nach einem der Ansprüche 1 bis 5, **dadurch gekennzeichnet, dass** sie ein Epifluoreszenz-Mikroskop, vorzugsweise mit einer Sammeleffizienz von Fluoreszenzquanten von > 3%, bei 40- bis 100-facher Vergrößerung, umfasst.

7. Vorrichtung nach einem der Ansprüche 1 bis 6, **dadurch gekennzeichnet, dass** die CCD-Kamera
- N₂-gekühlt ist,
- einen großen Pixelarray aufweist, insbesondere einen Pixelarray ≥ 1340 x 1300,
- eine Konversion von Photonen in Elektronen von 0, 8 bis 0 , 9 im optischen Bereich aufweist,
- ein Ausleserauschen von nur wenigen Elektronen pro Pixel bei 1 µs/Pixel Auslesegeschwindigkeit aufweist,
- « 1 Dunkelcounts/Pixel x s aufweist, und/oder
- eine Lineshift-Rate von > 3 x 10⁵/s aufweist.

8. Vorrichtung nach einem der Ansprüche 1 bis 7, **dadurch gekennzeichnet, dass** der Objektträger eine Durchflusszelle ist.

9. Vorrichtung nach einem der Ansprüche 1 bis 8, **dadurch gekennzeichnet, dass** die Fokussierungsebene des Detektions- und Analysesystems schrittweise vertikal durch ein Piezoelement verschiebbar ist.

10. Vorrichtung nach einem der Ansprüche 1 bis 9, **dadurch gekennzeichnet, dass** sie ein Epifluoreszenz-Mikroskop mit einem Parallelstrahlbereich als Lichtquelle aufweist, das einen galvano-optischen Spiegel im Parallelstrahlbereich beinhaltet.

11. Verfahren zur Visualisierung von Molekülen, von deren Bewegung und von wechselwirkungen zwischen Molekülen und von molekularen Prozessen in einer Probe, insbesondere von Molekülen und Prozessen inbiologischen Zellen, unter Verwendung der Single-Dye-Tracing. (SDT-) Methode, **dadurch gekennzeichnet, dass** eine Probe, in welcher bestimmte Moleküle mit Markermolekülen markiert worden sind, in eine Vorrichtung nach einem der Ansprüche 1 bis 10 eingebracht wird, dass die Probe durch die CCD-Kamera auf ein Pixelarray abgebildet wird, wobei die Probe und das Detektions- und Analysesystem relativ zueinander unter Verwendung des Frameshifts der CCD-Kamera verschoben werden, so dass die Signale jedes Einzelmoleküls in der Probe nach Konversion in Elektronen in den gleichen Pixeln gesammelt werden, so lange, bis das Einzelmolekülsignal einen bestimmten Mindest-Signal/Rausch-Abstand übersteigt.

12. Verfahren nach Anspruch 11, **dadurch gekennzeichnet, dass** die Relativbewegung der Probe entsprechend dem Frameshift der CCD-Kamera gesteuert wird.

13. Verfahren nach Anspruch 11 oder 12, **dadurch gekennzeichnet, dass** die Relativbewegung der Probe in lateraler Richtung konstant und kontinuierlich erfolgt.

14. Verfahren zur quasi-gleichzeitigen Abbildung Fluoreszenz-markierter Moleküle in ihrer Verteilung über ganze biologische Zellen und zur Verfolgung von molekularen Bewegungen und Prozessen durch Wiederholung dieser Abbildung in zeitlichen Abständen unter Verwendung der SDT-Methode, **dadurch gekennzeichnet, dass** eine Probe mit Zellen, in welchen bestimmte Moleküle mit Markermolekülen markiert worden sind, in eine Vorrichtung nach einem der Ansprüche 1 bis 10 eingebracht wird, das Fluoreszenzbild für eine Fokussierungsebene auf dem Pixelarray der CCD-Kamera abgebildet wird, die Fokussierungsebene schrittweise vertikal durch ein Piezoelement verschoben wird, wobei die Fluoreszenzbilder zu jeder Ebene separat auf dem Pixelarray angeordnet werden, und nach Abbildung sämtlicher Fokussierungsebenen die Abbildung der Fluoreszenz-markierten Moleküle in den Zellen errechnet wird, worauf gegebenenfalls die Abbildungen der Fokussierungsebenen wiederholt werden, um molekulare Bewegungen und Prozesse durch Aneinanderreihen von Abbildungen sämtlicher Fokussierungsebenen darzustellen.

15. Verfahren nach einem der Ansprüche 11 bis 14, **dadurch gekennzeichnet, dass** die Abbildungen auf dem Pixelarray der CCD-Kamera mit einer Rate von 1 bis 3 ms pro Bild und einer Kapazität von bis zu 300 Bildern pro Array bei einer Bildgröße von 80 x 80 Pixeln erfolgen.

16. Verfahren nach einem der Ansprüche 11 bis 15, **dadurch gekennzeichnet, dass** mindestens zwei verschiedene Arten von Molekülen in der Probe mit mindestens zwei verschiedenen Fluoreszenz-Markern markiert werden.

17. Verfahren nach einem der Ansprüche 11 bis 16, **dadurch gekennzeichnet, dass** die Fluoreszenz-Abbildung für zwei orthogonale Polarisationsrichtungen für jeden Fluoreszenz-Marker erfolgt, vorzugsweise durch Teilung der Abbildung in zwei Bilder mit orthogonaler Polarisationsrichtung durch Verwendung eines Wollaston-Prismas und einer Lichtquelle, die einen Parallelstrahlbereich aufweist, wobei das Wollaston-Prisma im Parallelstrahlbereich der Lichtquelle eingesetzt wird.

18. Verfahren nach einem der Ansprüche 11 bis 17, **dadurch gekennzeichnet, dass** die Probe Zellen mit geringer Eigenfluoreszenz umfasst.

19. verfahren nach einem der Ansprüche 11 bis 18, **dadurch gekennzeichnet, dass** das Verfahren als Hochdurchsatz-Analyse durchgeführt wird.

20. Verfahren nach einem der Ansprüche 11 bis 19, **dadurch gekennzeichnet, dass** als Probe eine Molekülbank untersucht wird, vorzugsweise eine durch kombinatorische Chemie hergestellte Molekülbank.

21. Verfahren nach einem der Ansprüche 11 bis 20, **dadurch gekennzeichnet, dass** die Wechselwirkung einer Molekülbank mit biologischen Zellen untersucht wird.

## Claims

1. An arrangement for visualising molecules, movements thereof, and interactions between molecules, and molecular processes in a sample, in particular molecules and processes in biological cells, by using the single dye tracing (SDT) method, comprising
• at least one source of light for large-area fluorescence excitation by means of light, in particular laser light, of at least one wave length via single or multi-photon absorption by equal or different marker molecules to molecules in the sample,
• a sample holding means for accommodating the sample,
• a highly-sensitive detection and analysis system comprising a charged coupled device (CCD) camera, the sample or the sample holding means, respectively, and the detection and analysis system being laterally and/or vertically shiftable relative to each other during the measuring process, and
• a control unit for coordinating and synchronising illumination times and, optionally, wave lengths of the lateral and/or vertical relative movement between the sample or of the sample holding means, respectively, with the sample and the detection and analysis system as well as, preferably, the positioning and shifting of the images to each sample position on the pixel array of the CCD camera.

2. An arrangement according to claim 1, **characterised in that** at least one source of light is a laser, in particular an acousto-optically switchable laser light.

3. An arrangement according to claim 1 or 2, **characterised in that** the source of light is an argon laser, a dye laser and/or a two-photon fluorescence excitation laser.

4. An arrangement according to any one of claims 1 to 3, **characterised in that** the control unit comprises a pulse transmitter and a software for controlling the source(s) of light and the relative movement between the sample and the detection and analysis system.

5. An arrangement according to any one of claims 1 to 4, **characterised in that** the CCD camera comprises a frame shift mode and a continuous readout mode.

6. An arrangement according to any one of claims 1 to 5, **characterised in that** it comprises an epifluorescence microscope, preferably with a collecting efficiency of fluorescence quantums of > 3%, at 40- to 100-fold magnification.

7. An arrangement according to any one of claims 1 to 6, **characterised in that** the CCD camera
• is N₂-cooled,
• comprises a large pixel array, in particular a pixel array ≥1340 x 1300,
• comprises a conversion of photons into electrons of from 0.8 to 0.9 in the optical range,
• has a readout noise of only a few electrons per pixel at 1 µs/pixel readout speed,
• comprises « 1 dark counts/pixel x s, and/or
• comprises a line shift rate of > 3 x 10⁵/s.

8. An arrangement according to any one of claims 1 to 7, **characterised in that** the sample carrier is a flowthrough cell.

9. An arrangement according to any one of claims 1 to 8, **characterised in that** the focussing plane of the detection and analysis system is shiftable step-wise vertically by a piezo element.

10. An arrangement according to any one of claims 1 to 9, **characterized in that** it comprises an epifluorescence microscope with a parallel beam region as the light source, which includes a galvano-optical mirror in the parallel beam region.

11. A method for visualizing molecules, movements thereof, and interactions between molecules, and molecular processes in a sample, in particular molecules and processes in biological cells, by using the single dye tracing (SDT) method, **characterised in that** a sample in which certain molecules have been labeled with marker molecules is introduced into an arrangement according to any one of claims 1 to 10, that the sample is imaged by the CCD camera on a pixel array, wherein the sample and the detection and analysis system are shifted relative to each other by using the frame shift of the CCD camera, so that the signals of each individual molecule in the sample are collected in the same pixels after conversion into electrons until the single molecule signal exceeds a certain minimum signal/noise ratio.

12. A method according to claim 11, **characterised in that** the relative movement of the sample is controlled corresponding to the frame shift of the CCD camera.

13. A method according to claim 11 or 12, **characterised in that** the relative movement of the sample in lateral direction is constant and continuous.

14. A method for quasi-simultaneous imaging of fluorescence-labeled molecules in their distribution over entire biological cells and for observing molecular movements and processes by repeating this imaging at temporal intervals by using the SDT method, **characterised in that** a sample with cells in which certain molecules have been labeled with marker molecules is introduced into an arrangement according to any one of claims 1 to 10, the fluorescence image for one focussing plane is imaged on the pixel array of the CCD camera, the focussing plane is shifted step-wise vertically by a piezo element, wherein the fluorescence images for each plane are separately arranged on the pixel array, and after imaging of all the focussing planes, the image of the fluorescence-labeled molecules in the cells is calculated, whereupon, optionally, imaging of the focussing planes is repeated so as to trace molecular movements and processes by consecutively arranging images of all the focussing planes.

15. A method according to any one of claims 11 to 14, **characterised in that** the images on the pixel array of the CCD camera are captured at a rate of from 1 to 3 ms per image and with a capacity of up to 300 images per array, with an image size of 80 x 80 pixels.

16. A method according to any one of claims 11 to 15, **characterised in that** at least two different types of molecules in the sample are labelled with at least two different fluorescence markers.

17. A method according to any one of claims 11 to 16, **characterized in that** the fluorescence imaging is effected for two orthogonal polarization directions for each fluorescence marker, preferably by dividing the image into two images with orthogonal polarization direction, by using a Wollaston prism and a source of light which comprises a parallel beam region, wherein the Wollaston prism is used in the parallel beam region of the source of light.

18. A method according to any one of claims 11 to 17, **characterised in that** the sample comprises cells with low autofluorescence.

19. A method according to any one of claims 11 to 18, **characterised in that** the method is carried out as a high throughput analysis.

20. A method according to any one of claims 11 to 19, **characterised in that** as the sample, a molecule library is analyzed, preferably a molecule library prepared by combinatorial chemistry.

21. A method according to any one of claims 11 to 20, **characterised in that** the interaction of a molecule library with biological cells is analyzed.

## Revendications

1. Dispositif pour la visualisation de molécules, de leur mouvement et d'interactions entre des molécules et de processus moléculaires dans un échantillon, en particulier de molécules et de processus dans des cellules biologiques, au moyen de la méthode Single-Dye-Tracing (SDT), comprenant :
- au moins une source lumineuse pour l'excitation de fluorescence à grande surface avec de la lumière, en particulier de la lumière laser, d'au moins une longueur d'onde par le biais de l'absorption d'un ou plusieurs photons par des molécules de marquage identiques ou différentes sur des molécules dans l'échantillon,
- un porte-objet pour la réception de l'échantillon,
- un système de détection et d'analyse hautement sensible, qui comprend un appareil photographique Charge-Coupled-Device (CCD), où l'échantillon ou le porte-objet et le système de détection et d'analyse sont déplaçables latéralement et/ou verticalement l'un par rapport à l'autre lors du processus de mesure, et
- une unité de commande pour la coordination et la synchronisation de temps d'éclairement et éventuellement de longueurs d'onde, du mouvement relatif latéral et/ou vertical entre l'échantillon ou le porte-objet avec l'échantillon et le système de détection et d'analyse ainsi que, de préférence, du positionnement et du déplacement des images à chaque position de l'échantillon sur la matrice de pixels de l'appareil photographique CCD.

2. Dispositif selon la revendication 1, **caractérisé en ce qu'**au moins une source lumineuse est un laser, en particulier une lumière laser commutable de manière acousto-optique.

3. Dispositif selon la revendication 1 ou 2, **caractérisé en ce que** la source lumineuse est un laser à argon, un laser à colorant et/ou un laser à excitation de fluorescence à deux photons.

4. Dispositif selon l'une des revendications 1 à 3, **caractérisé en ce que** l'unité de commande comprend un générateur d'impulsions et un logiciel pour la commande de la source lumineuse ou des sources lumineuses et du mouvement relatif entre l'échantillon et le système de détection et d'analyse.

5. Dispositif selon l'une des revendications 1 à 4, **caractérisé en ce que** l'appareil photographique CCD comprend un mode de frameshift et un mode de lecture continue.

6. Dispositif selon l'une des revendications 1 à 5, **caractérisé en ce qu'**il comprend un microscope à épifluorescence, de préférence avec un rendement global de quantums de fluorescence > 3 %, à un grossissement de 40 à 100 fois.

7. Dispositif selon l'une des revendications 1 à 6, **caractérisé en ce que** l'appareil photographique CCD
- est refroidi avec N₂,
- comprend une grande matrice de pixels, en particulier une matrice de pixels ≥ 1340 x 1300,
- présente une conversion de photons en électrons de 0,8 à 0,9 dans le domaine optique,
- présente un bruit de lecture de seulement quelques électrons par pixel à une vitesse de lecture de 1 µs/pixel,
- présente <<1 coup sombre/pixel x s, et/ou
- un taux de lineshift > 3 x 10⁵/s.

8. Dispositif selon l'une des revendications 1 à 7, **caractérisé en ce que** le porte-objet est une cellule à circulation.

9. Dispositif selon !'une des revendications 1 à 8, **caractérisé en ce que** le plan de focalisation du système de détection et d'analyse est déplaçable par pas verticalement par un piézo-élément.

10. Dispositif selon l'une des revendications 1 à 9, **caractérisé en ce qu'**il comporte un microscope à épifluorescence avec un domaine de rayons parallèles comme source lumineuse qui contient un miroir galvano-optique dans le domaine de rayons parallèles.

11. Procédé pour la visualisation de molécules, de leur mouvement et d'interactions entre des molécules et de processus moléculaires dans un échantillon, en particulier de molécules et de processus dans des cellules biologiques, au moyen de la méthode Single-Dye-Tracing (SDT), **caractérisé en ce qu'**un échantillon dans lequel des molécules déterminées ont été marquées avec des molécules de marquage est introduit dans un dispositif selon l'une des revendications 1 à 10, **en ce que** l'échantillon est représenté par l'appareil photographique CCD sur une matrice de pixels, où l'échantillon et le système de détection et d'analyse sont déplacés l'un par rapport à l'autre au moyen du frameshift de l'appareil photographique CCD de sorte que les signaux de chaque molécule individuelle dans l'échantillon sont rassemblés dans les mêmes pixels après conversion en électrons, jusqu'à ce que le signal de molécule individuelle dépasse une distance signal/bruit minimale déterminée.

12. Procédé selon la revendication 11, **caractérisé en ce que** le mouvement relatif de l'échantillon est commandé en fonction du frameshift de l'appareil photographique CCD.

13. Procédé selon la revendication 11 ou 12, **caractérisé en ce que** le mouvement relatif de l'échantillon a lieu de manière constante et continue en direction latérale.

14. Procédé pour la représentation quasi-simultanée de molécules marquées par fluorescence dans leur répartition sur des cellules biologiques entières et pour suivre des mouvements moléculaires et des processus moléculaires par répétition de cette représentation à intervalles temporels au moyen de la méthode SDT, **caractérisé en ce qu'**un échantillon avec des cellules dans lesquelles des molécules déterminées ont été marquées avec des molécules de marquage est introduit dans un dispositif selon l'une des revendications 1 à 10, l'image de fluorescence est formée pour un plan de focalisation sur la matrice de pixels de l'appareil photographique CCD, le plan de focalisation est déplacé par pas verticalement par un piézo-élément, où les images de fluorescence pour chaque plan sont disposées séparément sur la matrice de pixels, et après la représentation de tous les plans de focalisation, la représentation des molécules marquées par fluorescence dans les cellules est calculée, après quoi, éventuellement, les représentations des plans de focalisation sont répétées, pour représenter des mouvements moléculaires et des processus moléculaires par mise en place côte à côte de représentations de tous les plans de focalisation.

15. Procédé selon l'une des revendications 11 à 14, **caractérisé en ce que** les représentations ont lieu sur la matrice de pixels de l'appareil photographique CCD à une vitesse de 1 à 3 ms par image et à une capacité pouvant atteindre 300 images par matrice pour une taille d'image de 80 x 80 pixels.

16. Procédé selon l'une des revendications 11 à 15, **caractérisé en ce qu'**au moins deux types de molécules différents dans l'échantillon sont marqués avec au moins deux marqueurs de fluorescence différents.

17. Procédé selon l'une des revendications 11 à 16, **caractérisé en ce que** la représentation par fluorescence a lieu pour deux directions de polarisation orthogonales pour chaque marqueur de fluorescence, de préférence par division de la représentation en deux images avec une direction de polarisation orthogonale au moyen d'un prisme du Wollaston et d'une source lumineuse qui comporte un domaine de rayons parallèles, où le prisme du Wollaston est utilisé dans le domaine de rayons parallèles de la source lumineuse.

18. Procédé selon l'une des revendications 11 à 17, **caractérisé en ce que** l'échantillon comprend des cellules de faible fluorescence propre.

19. Procédé selon l'une des revendications 11 à 18, **caractérisé en ce que** le procédé est mis en oeuvre sous forme d'analyse à haut rendement.

20. Procédé selon l'une des revendications 11 à 19, **caractérisé en ce qu'**une banque de molécules, de préférence une banque de molécules produite par chimie combinatoire, est étudiée comme échantillon.

21. Procédé selon l'une des revendications 11 à 20, **caractérisé en ce que** l'interaction d'une banque de molécules avec des cellules biologiques est étudiée.
